# EUROPEAN PATENT APPLICATION

(11) **EP 4 775 418 A1**
(43) Date of publication of application: **15.07.2026**
(21) Application number: 25174925.5
(22) Date of filing: 08.05.2025
(51) Int. Cl.: B60G 17/005, B62D 61/10, B62D 63/02

(54) **AUTONOMOUS MOBILE ROBOT**

(30) Priority: 10.01.2025 WO PCT/KR2025/000642
(71) Applicant: LG Electronics Inc., Yeongdeungpo-gu Seoul 07336 (KR)
(72) Inventor: LEE, Sanghak, 07796 Seoul (KR); PARK, Junsin, 07796 Seoul (KR); KIM, Sunuk, 07796 Seoul (KR)
(74) Representative: Vossius & Partner Patentanwälte Rechtsanwälte mbB

(57) **Abstract**

Provided is an autonomous mobile robot (100) that transports an item loaded on a top surface thereof including a bottom frame (111), a pair of main driving units (171) positioned under the bottom frame (111) and operated by power of a driving motor (1712), and four casters positioned adjacent to lower corners of the bottom frame (111), respectively, wherein the main driving structure includes a wheel bracket fastened with the driving motor (1715), a main wheel rotatably fastened to the wheel bracket and rotatable by receiving the power of the driving motor (171), a suspension spring positioned between the wheel bracket and the bottom frame (1718), a stopper bracket fastened to the wheel bracket (1714a), and an upper stopper positioned on a bottom surface of the bottom frame to face the stopper bracket (1714b).

## Description

This application claims the benefit of PCT Patent Application No. PCT/KR2025/000642, filed on January 10, 2025.

### BACKGROUND

### Field

The present disclosure relates to an autonomous mobile robot (AMR) capable of stable travel.

### Discussion of the Related Art

To take charge of a portion of factory automation, robots have been developed for industrial use. Recently, the application range of robots has been further expanded, and robots that can be used in daily life as well as medical robots and aerospace robots are being developed.

Among industrial robots, robots that perform precise assembly work repeatedly perform the same operations and repeat the operations without encountering unexpected situations at a predetermined position, so that automation using the robots has been proceeded.

However, a transportation area including a traveling area (i.e., a driving area) where occurrence or non-occurrence of unexpected situations can be determined, has not yet been actively commercialized with robots. However, recently, as performance of sensors that recognize the surroundings has improved and computer technology that can quickly process the recognized information has evolved, the number of driving robots has rapidly increased.

Industrially, robots that are in charge of transportation functions have attracted attention and competition in robot technology is intensifying day by day. When loading items on top of a robot that transports a great amount of or large items, there is a problem that the robot has to wait in a stopped state when loading and unloading the items, which reduces use efficiency of the robot.

An autonomous mobile robot in a form of transporting a loading structure where the items are loaded rather than in a form of directly loading the items thereon is being used as a logistics robot.

The autonomous mobile robot should enter a space under the loading structure and lift a bottom surface of the loading structure to transport the loading structure. To support a load equal to or greater than 500kg, a complex support structure is required. However, there is a limitation on a height of the autonomous mobile robot to enter the space under the loading structure, making it difficult to implement a stable lift structure.

In addition, the autonomous mobile robot may have a problem that as weights before and after the loading are different from each other, loads supported by a plurality of wheels are different from each other, and thus a grip of a main wheel is weakened as a result.

### SUMMARY

The present disclosure is to provide an autonomous mobile robot (AMR) capable of stable travel.

Provided is an autonomous mobile robot that transports an item loaded on a top surface thereof including a bottom frame, a pair of main driving units positioned under the bottom frame and operated by power of a driving motor, and four casters positioned adjacent to lower corners of the bottom frame, respectively, wherein the main driving unit includes a wheel bracket fastened with the driving motor, a main wheel rotatably fastened to the wheel bracket and rotatable by receiving the power of the driving motor, a suspension spring positioned between the wheel bracket and the bottom frame, a stopper bracket fastened to the wheel bracket, and an upper stopper positioned on a bottom surface of the bottom frame to face the stopper bracket.

The autonomous mobile robot may further include a stopper actuator that selectively introduces and withdraws a stopper block into and from a space between the stopper bracket and the upper stopper, and a controller that controls the driving motor and the stopper actuator.

The stopper block may include a first inclined surface having a smaller height at one end than at the other end, and the stopper actuator may vary an insertion amount of the stopper block.

The autonomous mobile robot may further include a lift module seated on top of the bottom frame and having a variable height in a vertical direction, and a top frame that transitions from a standby state to a lifted state while being spaced upwardly apart from the bottom frame by the lift module, and the controller may operate the stopper actuator before the lift module is lifted to insert the stopper block into the space between the stopper bracket and the upper stopper.

The autonomous mobile robot may further include a lift sensor that senses a lifted height of the top frame, and an upper sensor that senses that the top frame touches a bottom surface of the loading structure, and the controller may stop operating the lift module and operate the driving motor when both the lift sensor and the upper sensor are turned on.

The controller may control a length of the stopper actuator such that the stopper block remains in contact with the upper stopper and the stopper bracket when the driving structure passes over a floor surface having a step.

The autonomous mobile robot may further include a Lidar module that senses a vertical level of the floor surface ahead, and the controller may determine whether there is the step based on a vertical level difference of the floor surface sensed by the Lidar module.

The autonomous mobile robot may further include a step sensor that senses a location of the stopper bracket or one side of the wheel bracket, and the controller may determine that the driving structure passes over the floor surface having the step when the step sensor senses a change in the location.

The stopper actuator may maintain the stopper block in a pressurized state while the autonomous mobile robot travels.

The autonomous mobile robot may further include a stopper elastic portion positioned between the stopper actuator and the stopper block.

A surface of the upper stopper or the stopper bracket facing the first inclined surface of the stopper block may include a second inclined surface.

The wheel bracket may include a suspension hinge located adjacent to a shaft of the main wheel and fixed to the bottom frame.

The suspension hinge and the upper stopper may be positioned in opposite directions with respect to the main wheel.

The autonomous mobile robot may further include a lower stopper facing a bottom surface of the stopper bracket.

The upper stopper may be fixed to the bottom surface of the bottom frame and may be constructed to come into contact with the stopper bracket on a flat ground.

The autonomous mobile robot of the present disclosure may avoid the reduction in the rigidity resulted from the bending molding using the plate-shaped base plate.

In addition, the autonomous mobile robot of the present disclosure may increase the accuracy of the SLAM because the lift unit does not interfere with the field of view of the Lidar.

In addition, the autonomous mobile robot of the present disclosure may modularize the Lidar and the 3D camera, which facilitates the mounting thereof on the body.

In addition, the autonomous mobile robot of the present disclosure may finely adjust the angle of the Lidar, thereby obtaining the accurate information on the obstacle and the terrain ahead.

In addition, the autonomous mobile robot of the present disclosure may travel stably without the slip by stably distributing the load to the wheels of the driving unit regardless of whether the loading structure is mounted.

In addition, the autonomous mobile robot of the present disclosure may prevent the slip from occurring even when passing over the floor surface with the step because the load is not concentrated on the specific wheel.

Effects obtainable from the present embodiments are not limited by the above mentioned effects, and other unmentioned effects can be clearly understood from the above description by those having ordinary skill in the technical field to which the present disclosure pertains.

### BRIEF DESCRIPTION OF THE DRAWINGS

FIG. 1 is a diagram illustrating a cloud system based on a 5G network according to an embodiment of the present disclosure.
FIG. 2 is a block diagram illustrating a configuration of an autonomous mobile robot according to an embodiment of the present disclosure.
FIG. 3 is a diagram illustrating a robot control system according to an embodiment of the present disclosure.
FIG. 4 is a top perspective view of an autonomous mobile robot according to an embodiment of the present disclosure.
FIG. 5 is a bottom perspective view of an autonomous mobile robot according to an embodiment of the present disclosure.
FIG. 6 is a view illustrating a process of an autonomous mobile robot of the present disclosure docking with a loading structure.
FIG. 7 is an exploded perspective view of an autonomous mobile robot according to a first embodiment of the present disclosure.
FIG. 8 is a plan view of an autonomous mobile robot according to a first embodiment of the present disclosure.
FIG. 9 is an exploded perspective view of an autonomous mobile robot according to a second embodiment of the present disclosure.
FIG. 10 is a plan view of an autonomous mobile robot according to a second embodiment of the present disclosure.
FIG. 11 is a diagram comparing support areas of autonomous mobile robots according to a first embodiment and a second embodiment of the present disclosure.
FIG. 12 is a perspective view illustrating a bottom frame of an autonomous mobile robot of the present disclosure.
FIG. 13 is a diagram illustrating a lift unit of an autonomous mobile robot according to a second embodiment of the present disclosure.
FIG. 14 is a diagram illustrating a lift module of an autonomous mobile robot according to a second embodiment of the present disclosure.
FIG. 15 is a cross-sectional view of an autonomous mobile robot in a standby state according to a second embodiment of the present disclosure.
FIG. 16 is a cross-sectional view of an autonomous mobile robot in a lifted state according to a second embodiment of the present disclosure.
FIG. 17 is a perspective view illustrating an optical sensor module of an autonomous mobile robot of the present disclosure.
FIG. 18 is an exploded perspective view illustrating an optical sensor module of an autonomous mobile robot of the present disclosure.
FIG. 19 is a diagram illustrating angle markers formed on a level guide protrusion and a level guide hole of an optical sensor module of an autonomous mobile robot of the present disclosure.
FIG. 20 is a diagram showing an uneven surface of terrain sensed by a Lidar before and after level adjustment of an optical sensor module of an autonomous mobile robot of the present disclosure.
FIG. 21 is a diagram illustrating a field of view of a 3D camera of an optical sensor module of an autonomous mobile robot of the present disclosure.
FIG. 22 is a perspective view illustrating a main driving unit of an autonomous mobile robot of the present disclosure.
FIG. 23 is a cross-sectional view illustrating a main driving unit of an autonomous mobile robot of the present disclosure.
FIG. 24 is a diagram for illustrating a propulsive force of a main driving unit of an autonomous mobile robot of the present disclosure.
FIGS. 25 and 26 are diagrams illustrating load distribution of a driving unit of an autonomous mobile robot without a stopper module.
FIG. 27 is a diagram illustrating load distribution of a driving unit of an autonomous mobile robot of the present disclosure.
FIG. 28 is a diagram illustrating a modified embodiment of a stopper module of a main driving unit of an autonomous mobile robot of the present disclosure.
FIG. 29 is a flowchart illustrating a method for operating a stopper module of an autonomous mobile robot in FIG. 28.

### DESCRIPTION OF SPECIFIC EMBODIMENTS

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element may be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A robot is a machine device capable of automatically performing a certain task or operation. The robot may be controlled by an external control device or may be embedded in the control device. The robot may perform tasks that are difficult for humans to perform, such as repeatedly processing only a preset operation, lifting a heavy object, performing precise tasks or a hard task in extreme environments.

In order to perform such tasks, the robot includes a driver such as an actuator or a motor, so that the robot may perform various physical operations, such as moving a robot joint.

Industrial robots or medical robots having a specialized appearance for specific tasks due to problems such as high manufacturing costs and dexterity of robot manipulation were the first to be developed.

Whereas industrial and medical robots are configured to repeatedly perform the same operation in a designated place, mobile robots have recently been developed and introduced to the market. Robots for use in the aerospace industry may perform exploration tasks or the like on distant planets that are difficult for humans to directly go to, and such robots have a driving function.

In order to perform the driving function, the robot has a driver, wheel(s), a frame, a brake, a caster, a motor, etc. In order for the robot to recognize the presence or absence of surrounding obstacles and move while avoiding the surrounding obstacles, an evolved robot equipped with artificial intelligence has recently been developed.

Artificial intelligence refers to a technical field for researching artificial intelligence or a methodology for implementing the artificial intelligence. Machine learning refers to a technical field for defining various problems handled in the artificial intelligence field and for researching methodologies required for addressing such problems. Machine learning is also defined as an algorithm that improves performance of a certain task through continuous experience.

An artificial neural network (ANN) is a model used in machine learning, and may refer to an overall model having problem solving ability, which is composed of artificial neurons (nodes) that form a network by a combination of synapses. The artificial neural network (ANN) may be defined by a connection pattern between neurons of different layers, a learning process of updating model parameters, and an activation function of generating an output value.

The artificial neural network (ANN) may include an input layer and an output layer, and may optionally include one or more hidden layers. Each layer includes one or more neurons, and the artificial neural network (ANN) may include a synapse that interconnects neurons and other neurons.

In the artificial neural network (ANN), each neuron may output a function value of an activation function with respect to input signals received through synapses, weights, and deflection.

A model parameter may refer to a parameter determined through learning, and may include the weight for synapse connection and the deflection of neurons. In addition, the hyperparameter refers to a parameter that should be set before learning in a machine learning algorithm, and includes a learning rate, the number of repetitions, a mini-batch size, an initialization function, and the like.

The purpose of training the artificial neural network (ANN) may be seen as determining model parameters that minimize a loss function according to the purpose of the robot or the field of use of the robot. The loss function may be used as an index for determining an optimal model parameter in a learning process of the artificial neural network (ANN).

Machine learning may be classified into supervised learning, unsupervised learning, and reinforcement learning according to learning methods.

Supervised learning refers to a method for training the artificial neural network (ANN) in a state where a label for learned data is given. Here, the label may refer to a correct answer (or a resultant value) that should be inferred by the artificial neural network (ANN) when the learned data is input to the artificial neural network (ANN). Unsupervised learning may refer to a method for training the artificial neural network (ANN) in a state where a label for learned data is not given. Reinforcement learning may refer to a learning method in which an agent defined in the certain environment learns to select an action or sequence of actions that may maximize cumulative compensation in each state.

Among artificial neural networks, machine learning implemented as a deep neural network (DNN) including a plurality of hidden layers is also referred to as deep learning, and deep learning is a part of machine learning. Hereinafter, machine learning is used in a sense including deep learning.

Artificial intelligence (AI) technology is applied to the robot, so that the robot may be implemented as a guide robot, a autonomous mobile robot, a cleaning robot, a wearable robot, an entertainment robot, a pet robot, and an unmanned aerial robot, etc.

The robot may include a robot control module for controlling operation thereof, and the robot control module may refer to a software module or a chip implemented in hardware.

By means of sensor information obtained from various types of sensors, the robot may acquire state information of the robot, may detect (recognize) the surrounding environment and the object, may generate map data, may determine a driving path and a driving plan, may determine a response to user interaction, or may determine a necessary operation.

The robot may perform the above-described operations using a learning model composed of at least one artificial neural network (ANN). For example, the robot may recognize the surrounding environment and object using a learning model, and may determine a necessary operation using the recognized surrounding environment information or object information. Here, the learning model may be directly learned from the robot or learned from an external device such as an AI server.

In this case, whereas the robot may perform a necessary operation by directly generating a result using the learning model, the robot may also perform an operation by transmitting sensor information to an external device such as an AI server and receiving the resultant information generated thereby.

The robot may perform autonomous driving through artificial intelligence. Autonomous driving refers to a technique in which a movable object such as a robot may autonomously determine an optimal path by itself and may move while avoiding collision with an obstacle. The autonomous driving technique currently being applied may include a technique in which the movable object (e.g., a robot) may travel while maintaining a current driving lane, a technique in which the movable object may travel while automatically adjusting a driving speed such as adaptive cruise control, a technique in which the movable object may automatically travel along a predetermined path, and a driving technique in which, after a destination is decided, a path to the destination is automatically set.

In order to perform autonomous driving, the movable object such as the robot may include a large number of sensors to recognize data of the surrounding situation. For example, the sensors may include a proximity sensor, an illumination sensor, an acceleration sensor, a magnetic sensor, a gyro sensor, an inertial sensor, an RGB sensor, an infrared (IR) sensor, a fingerprint recognition sensor, an ultrasonic sensor, an optical sensor, a microphone, a Lidar, a radar, and the like.

The robot may perform autonomous driving not only based on information collected by sensors, but also based on image information collected by an RGBC camera and an infrared (IR) camera and sound information collected through a microphone. In addition, the robot may travel based on information received through a user input unit. Map data, position information, and information about peripheral situations may be collected through a wireless communication unit. The collected information is requisite for autonomous driving.

Map data may include object identification information for various objects disposed in a space where the robot moves. For example, the map data may include object identification information for fixed objects such as a wall and a door, and other object identification information for movable objects such as a flowerpot and a desk. In addition, the object identification information may include a name, a type, a distance, a location, etc.

Therefore, the robot may essentially include sensors, various input units, a wireless communication unit, and the like to collect data that may be learned by artificial intelligence, and may perform optimal operations by synthesizing various types of information. The learning processor for performing artificial intelligence may perform learning by being mounted in a controller embedded in the robot, may transmit the collected information to a server, may perform learning through the server, and may retransmit the learned result to the robot, so that the robot may perform autonomous driving based on the learned result.

A robot equipped with artificial intelligence may collect the surrounding information even in a new place to implement the entire map, and a large amount of information about a place of the major activity zone may be accumulated, so that the robot may perform more accurate autonomous driving.

The robot may include a touchscreen or a button to receive a user input, and may receive a command by recognizing a user's voice. In order to convert a voice input signal into a character string, the processor may obtain information about the intention corresponding to the user input using at least one of a speech to text (STT) engine for converting a voice input into a character string and a natural language processing (NLP) engine for obtaining information about the intention of natural language.

In this case, at least one of the STT engine and the NLP engine may include an artificial neural network (ANN) trained by a machine learning algorithm. In addition, at least one of the STT engine and the NLP engine may be trained by the learning processor, may be trained by the learning processor of the AI server, or may be trained by distributed processing of the trained results.

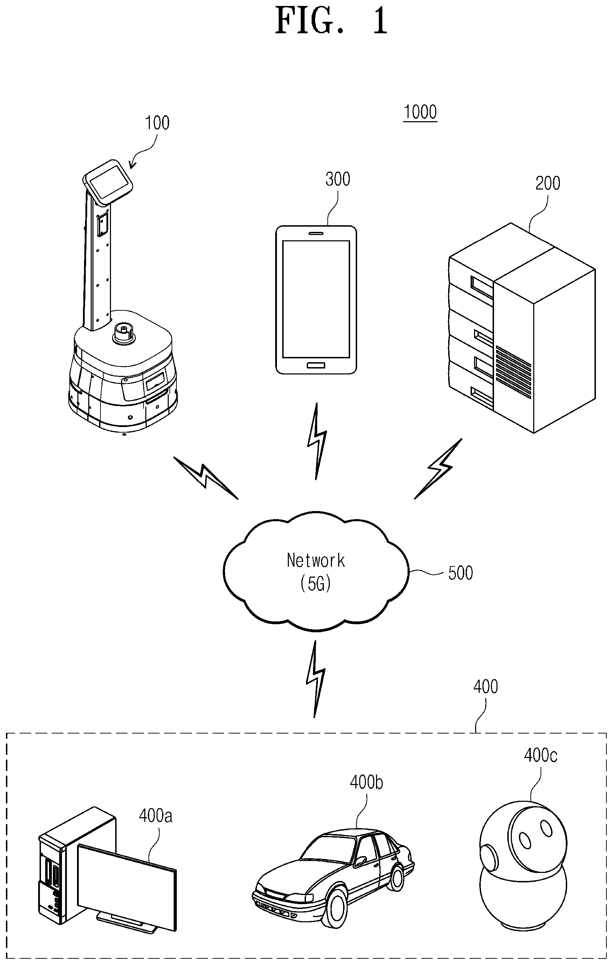

FIG. 1 is a diagram illustrating a cloud system 1000 based on a 5G network according to an embodiment of the present disclosure.

Referring to FIG. 1, the cloud system 1000 may include a autonomous mobile robot 100, a mobile terminal 300, a robot control system 200, various devices 400, and a 5G network 500.

The autonomous mobile robot 100 is a robot that transports goods (articles) from a departure point to a destination. The autonomous mobile robot 100 can move directly from a logistics center to a destination. Alternatively, after the autonomous mobile robot is loaded on a vehicle at the logistics center and is then delivered to the vicinity of the destination by the vehicle, the autonomous mobile robot is unloaded from the vehicle and then moves to the destination.

In addition, the autonomous mobile robot 100 may move articles to the destination not only outdoors but also indoors. The autonomous mobile robot 100 can be implemented as an AGV, and the AGV may be a transport device that moves by a sensor, a magnetic field, a vision device, etc. on the floor.

The autonomous mobile robot 100 may include a storage area for storing articles therein, the storage area may be divided into a plurality of partial storage areas to load various articles, and various types of articles may be placed in the partial storage areas. Accordingly, mixing of articles can be prevented.

The mobile terminal 300 may communicate with the autonomous mobile robot 100 via the 5G network 500. The mobile terminal 300 may be a device carried by a user who installs a partition in the storage area to load articles, or may be a device carried by a recipient of the loaded articles. The mobile terminal 300 may provide information based on images, and the mobile terminal 300 may include mobile devices such as a mobile phone, a smartphone, a wearable device (e.g., a watch-type terminal, a glass-type terminal, an HMD).

The robot control system 200 may remotely control the autonomous mobile robot 100 and respond to various requests of the autonomous mobile robot 100. For example, the robot control system 200 may perform calculations using artificial intelligence (AI) based on the request from the autonomous mobile robot 100.

In addition, the robot control system 200 may determine a movement path of the autonomous mobile robot 100. When there is a plurality of destinations, the robot control system 200 may determine the order of the destinations when there are multiple destinations.

The various devices 400 may include a personal computer (PC) 400a, an autonomous vehicle 400b, a home robot 400c, etc. When the autonomous mobile robot 100 arrives at the transport destination of the articles, the autonomous mobile robot 100 can directly deliver the articles to the home robot 400c through communication with the home robot 400c.

The various devices 400 may be connected to the autonomous mobile robot 100, the mobile terminal 300, the robot control system 200, etc., via the 5G network 500 by wire or wirelessly.

The autonomous mobile robot 100, the mobile terminal 300, the robot control system 200, and various devices 400 are all equipped with 5G modules to transmit and receive data at a rate of 100 Mbps to 20 Gbps (or higher), so that large video files can be transmitted to various devices, and power consumption can be minimized by operating at low power. However, the transfer rate may be implemented differently depending on the embodiments.

The 5G network 500 may include a 5G mobile communication network, a short-range network, the Internet, etc., and may provide a communication environment for devices by wire or wirelessly.

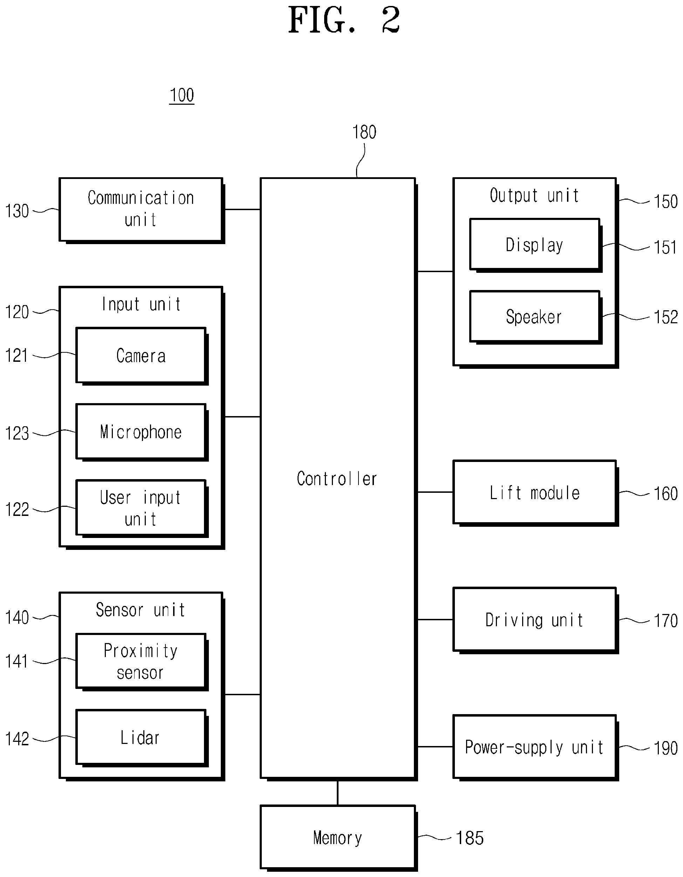

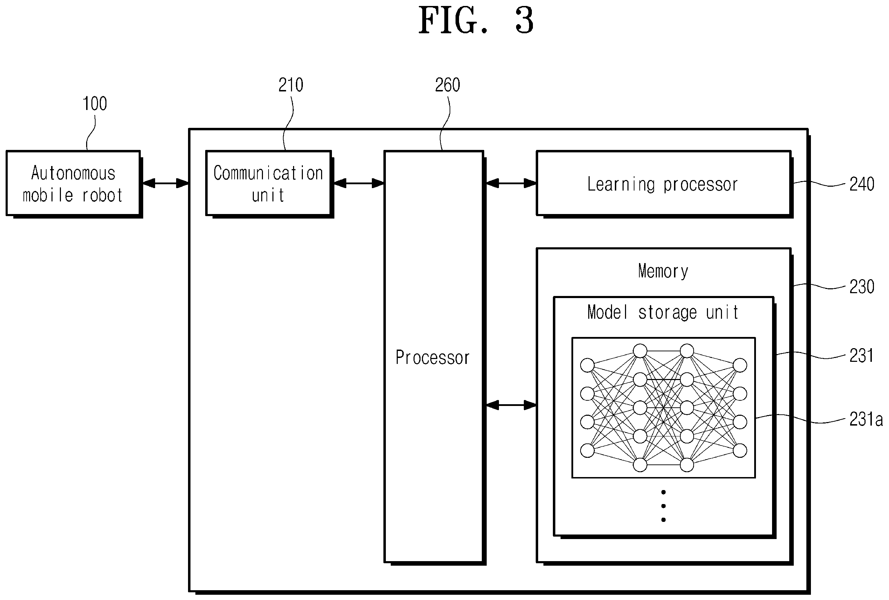

FIG. 2 is a block diagram illustrating appearance of the autonomous mobile robot 100 according to an embodiment of the present disclosure. The autonomous mobile robot 100 according to an embodiment of the present disclosure will be described with reference to FIGS. 3 to 5.

Referring to FIG. 2, the autonomous mobile robot 100 may include a body including a storage area 50, and constituent components to be described later may be included in the body. The autonomous mobile robot 100 may include a communication unit 110, an input unit 120, a sensor unit 140, an output unit 150, a memory 185, a wheel driving unit 170, a controller 180, and a power-supply unit 190. The constituent components shown in FIG. 2 are not always required to implement the autonomous mobile robot 100, such that it should be noted that the autonomous mobile robot 100 according to the present disclosure may include more or fewer components than the elements listed above.

The communication unit 110 may include a wired or wireless communication module capable of communicating with the robot control system 200.

As an optional embodiment, the communication unit 110 may be equipped with modules for GSM, CDMA, LTE, 5G, WLAN, Wi-Fi, Bluetooth, RFID, infrared communication (IrDA), ZigBee, and NFC communication.

The input unit 120 may include a user input unit 122 for receiving information from a user. As an optional embodiment, the input unit 120 may include a camera 121 for inputting an image signal, and a microphone 123 (hereinafter referred to as a "microphone") for receiving an audio signal. Here, the camera 121 or the microphone 123 may be treated as a sensor, and a signal acquired from the camera 121 or the microphone 123 may be referred to as sensing data or sensor information.

The input unit 120 may acquire input data to be used when acquiring output data using learning data and a learning model for model learning. The input unit 120 may obtain unprocessed input data. In this case, the controller 180 may extract input feature points as preprocessing for the input data.

The camera 121 may be located in front to detect obstacles in front, and as shown in FIG. 3, a plurality of cameras 121 may be arranged to be different in angle. In more detail, the plurality of cameras 121 may have different capture directions, such as a camera for widely recognizing a front-view area and a camera for capturing a floor.

Alternatively, cameras with different functions may be provided. For example, a wide-angle camera, an infrared (IR) camera, etc. may be provided. The camera may serve as a sensor unit 140 for detecting surrounding objects.

The user input unit 122 may be provided with a touch panel overlapping with a button or a display 151. Alternatively, a user command may be input remotely through the communication unit 110. In this case, the user input unit 122 may include a PC 400 or a remote control device separately provided from the autonomous mobile robot 100.

Since the user input unit 122 includes all methods capable of receiving user commands, the user input unit 122 can recognize user commands through voice recognition. That is, a voice recognition device that analyzes voice collected from the microphone 123 and extracts user commands can also serve as the user input unit 122.

The input unit 120 may include an article information input unit, and the article information input unit may receive information about the article's size, information about the article's weight, destination information, information about a transport requester, etc. At this time, the article information input unit may include a code reader.

The sensor unit 140 may obtain at least one of internal information of the autonomous mobile robot 100, surrounding environment information of the autonomous mobile robot 100, and user information using various sensors.

At this time, the sensor unit 140 may include various types of sensors for recognizing the surroundings for autonomous driving. Representative examples may include a distance detection sensor or a proximity sensor 141 and a Lidar 141.

The proximity sensor 141 may include an ultrasonic sensor that recognizes nearby objects and determines the distance to the objects based on the time taken for emitted ultrasonic waves to return. A plurality of proximity sensors may be provided along the circumference, and may also be provided on an upper side to detect obstacles located on the upper side.

The Lidar 142 is a device that precisely expresses exterior appearances of the surroundings by emitting laser pulses and receiving the light that is reflected from the surrounding objects. The operation principle of the Lidar 142 is similar to that of a radar, but different electromagnetic waves are used in the Lidar 142 and the radar, so that the Lidar 142 and the radar are designed to use different technologies and different utilization ranges.

Lasers may damage human eyesight because they use light with a wavelength of 600 to 1000 nm. The Lidar 142 uses a longer wavelength than the lasers, and is used to measure not only the distance to a target object, but also a moving speed and direction, temperature, surrounding atmospheric material analysis, a concentration measurement, and the like. In addition, the sensor unit 140 may include an illumination sensor, an acceleration sensor, a magnetic sensor, a gyro sensor, an inertial sensor, an RGB sensor, an infrared (IR) sensor, a fingerprint recognition sensor, an ultrasonic sensor, a light sensor, an optical sensor, etc.

The output unit 150 may generate various output signals related to visual, auditory and/or tactile sensations. The output unit 150 may include an optical output unit that outputs visual information, a display 151, etc. The output unit 150 may include a speaker 152 for outputting auditory information, an ultrasonic output unit for outputting ultrasonic signals belonging to an inaudible frequency, etc., and a haptic module for outputting tactile information.

A lift module 160 is a structure that lifts and lowers a top surface of the body such that the top surface of the body supports a lower portion of a loading structure. The lift module 160 may include an actuator/motor that applies a force in a vertical direction.

The memory 185 may store data that supports various functions of the autonomous mobile robot 100. The memory 185 may store not only a plurality of application programs (or applications) driven by the autonomous mobile robot 100, but also data and commands required to operate the autonomous mobile robot 100.

In addition, the memory 185 may store information required to perform operations using artificial intelligence, machine learning, and artificial neural networks. The memory 185 may store a deep neural network model. The deep neural network model may be used to infer a result value for new input data rather than learning data, and the inferred value may be used as a basis of determination required to perform a certain operation.

The power-supply unit 190 may receive external power or internal power under control of the controller 180, such that the power-supply unit 190 may supply the received power to the constituent components included in the autonomous mobile robot 100. The power-supply unit 190 may include, for example, a battery. The battery 191 may be implemented as an embedded battery or a replaceable battery. The battery may be charged by a wired or wireless charging method, and the wireless charging method may include a magnetic induction method or a magnetic resonance method.

The driving unit 170 is a means for moving the autonomous mobile robot 100, may include wheels or legs, and may include a wheel driving unit and a leg driving unit for controlling the wheels or legs.

A plurality of wheels provided on the bottom surface of the wheel driving unit may be controlled to move the autonomous mobile robot 100 including the body. The wheels may include a main wheel 171 for fast driving, a caster 173 for changing the direction to another direction, and an auxiliary caster for stable driving so that the loaded articles (L) do not fall during driving.

The controller 180 is a module that controls the configurations of the autonomous mobile robot 100. The controller 180 may refer to a data processing device embedded in hardware that has a physically structured circuit to perform a function expressed by code or commands included in a program. As an example of the data processing device embedded in hardware, this exemplary data processing device may include processing devices such as a microprocessor, a central processing unit (CPU), a processor core, a multiprocessor, an ASIC, and an FPGA, but the scope of the present disclosure is not limited thereto.

For example, the controller 180 may collect the above information through the input unit 120. The input of the input unit 120 may also include a touch input on the display.

Based on the collected information, the controller 180 may transmit information on the articles (L) loaded in the loading area 50 to the mobile terminal 200 (see FIG. 1) through the communication unit 110.

Referring to FIG. 3, the robot control system 200 may include an artificial intelligence (AI) server. The AI server may mean a device that uses a machine learning algorithm to train an artificial neural network or uses a trained artificial neural network. Here, the robot control system 200 may include a plurality of servers to perform distributed processing, and may be defined as a 5G network. At this time, the AI server may be included as a part of the configuration of the autonomous mobile robot 100, and may also enable the autonomous mobile robot 100 to perform at least a part of the AI processing.

The robot control system 200 may include a communication unit 210, a memory 230, a learning processor 240, a processor 260, etc.

The communication unit 210 may transmit and receive data to and from an external device such as the autonomous mobile robot 100.

The memory 230 may include a model storage unit 231. The model storage unit 231 may store a learning or learned model (or an artificial neural network 231a) through the learning processor 240.

The learning processor 240 may train (or learn) the artificial neural network 231a using training data (also called learning data). The learning model may be used while being loaded into the robot control system 200 of the artificial neural network, or may be loaded into an external device such as the autonomous mobile robot 100 and then used.

The learning model may be implemented as hardware, software, or a combination of hardware and software. If all or some of the learning model are implemented as software, one or more commands constituting the learning model can be stored in the memory 230.

The processor 260 may infer a result value for new input data using the learning model, and may generate a response or control command based on the inferred result value.

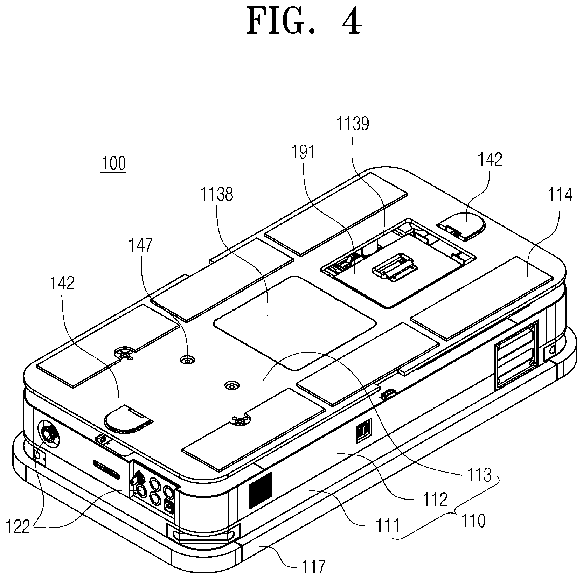

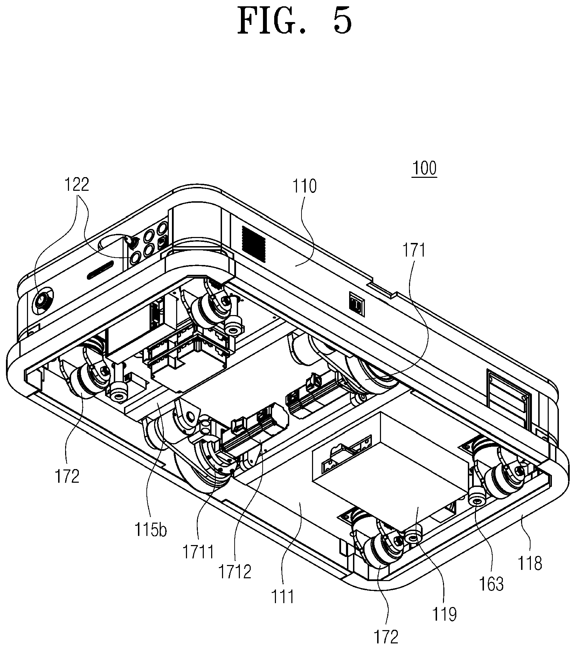

FIG. 4 is a top perspective view of the autonomous mobile robot 100 according to an embodiment of the present disclosure, and FIG. 5 is a bottom perspective view of the autonomous mobile robot 100 according to an embodiment of the present disclosure. The autonomous mobile robot 100 of the present disclosure may move via the driving unit 170 located under a body 110. The body 110 of the autonomous mobile robot 100 may have a box-shaped form, and the body 110 may be composed of a bottom frame 111, a middle frame 112, and a top frame 113.

The bottom frame 111 has various components mounted on a top surface thereof, has the driving unit 170 on a bottom surface thereof, and serves as a foundation of the body 110. The middle frame 112 is fastened to an upper portion of the bottom frame 111 and covers the components loaded on the bottom frame 111. The middle frame 112 may form a side outer appearance of the body 110, and a top surface thereof may be partially opened for operation of the lift module 160.

The top frame 113 may include a flat top surface such that the loading structure may be seated thereon. A vertical level of the top frame 113 may be adjusted by the lift module 160 seated on the bottom frame 111, and the lift module 160 and the driving unit may be arranged on the same plane to implement a low-profile body 110.

The top frame 113 may include a contact pad 114 made of an elastic material such as silicone or urethane to cushion and prevent sliding when the loading structure comes into contact with the top surface thereof. The top surface of the top frame 113 may further include an upper sensor 147, such as a proximity sensor or a contact sensor, to determine whether it is docked with the loading structure.

The top frame 113 may include a battery replacement hole 1139 at a location corresponding to a battery seating portion 119 for convenience of replacing the battery 191. The battery 119 may be in a detachable form, and the battery replacement hole 1139 may be provided without a cover as shown in FIG. 5 for convenience of replacing the battery 191.

A control box 181 in which a plurality of substrates are stored as a controller may be mounted on the bottom frame 111, and the top frame 113 may include a maintenance opening 1138 including an openable cover for maintenance of the control box 181.

The driving unit 170, the power-supply unit 190, the controller 180, the sensing unit 140, the lift module 160, and the like may be mounted inside the flat box-shaped body 110. The controller 180 may generate a travel route to reach a destination using a map that is stored in advance or received from a server, and may recognize a surrounding object via the sensing unit 140 and move to the destination by avoiding an obstacle that is not on the map.

The sensing unit 140 may include the Lidar 142 capable of generating a two-dimensional precise map. The Lidar 142 may be positioned on the body 110, and the Lidar 142 may require an opening horizontally long to sufficiently secure a sensing angle.

The present disclosure may secure the sensing angle of the Lidar 142 by positioning the Lidar 142 between the top frame 113 and the middle frame 112 as illustrated in FIGS. 4 and 5 and utilizing a gap between the top frame 113 and the middle frame 112. The Lidar 142 may be positioned at each of front and rear portions of the autonomous mobile robot. As illustrated in FIG. 5, the driving unit 170 may be composed of a pair of main driving units 171 that rotate by receiving power of a driving motor and a plurality of casters 172 that support the body 110. The pair of main driving units may be arranged symmetrically in a left and right direction at a center of the body 110, and the casters 172 may be arranged at four corners of the body 110.

The caster 172 may rotate around a vertical shaft, so that a wheel shaft of the caster may be disposed in a direction perpendicular to a travel direction of the autonomous mobile robot 100. The main driving unit 171 may include a suspension spring to minimize shaking when passing over an uneven surface of a floor surface.

The main driving unit 171 may include a reducer to increase a propulsive force of the driving motor. A size of a main wheel 1711 of the main driving unit 171 is greater than a size of a caster wheel 1721 of the caster 172. For example, the main wheel 1711 may use a 6-inch wheel, and the caster wheel 1721 may use a 3-inch wheel.

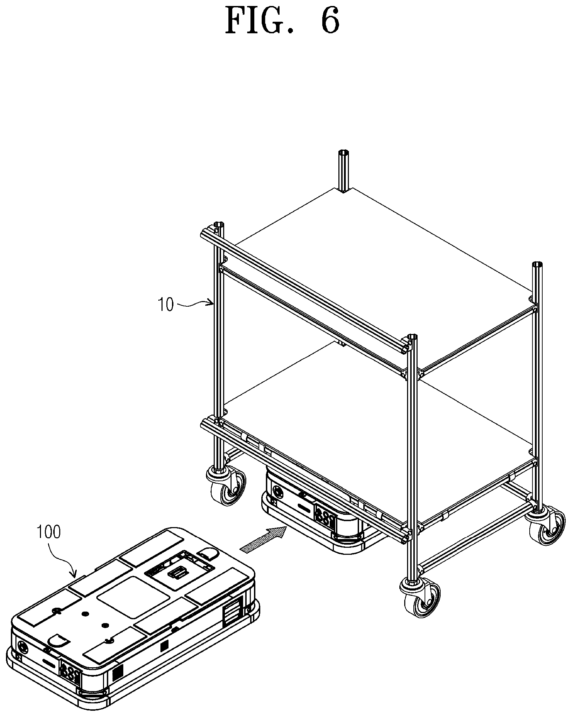

FIG. 6 is a view illustrating a process of the autonomous mobile robot 100 of the present disclosure docking with a loading structure 10.

After the autonomous mobile robot 100 enters a space under the loading structure 10, such as a shelf or a pallet cart as shown in FIG. 6, a vertical level of an upper housing 610 is increased, so that a top surface 611 may come into contact with a bottom surface of the loading structure 10 to lift the loading structure 10.

The autonomous mobile robot 100 may use the sensing unit 140 to enter a space between wheels of the loading structure 10, and may operate the lift module 160 under the loading structure 10 to control the top frame 113 to be in contact with the bottom surface of the loading structure 10.

The autonomous mobile robot 100 may move to the destination with the loading structure 10 placed thereon, and when reaching the destination, the autonomous mobile robot 100 may lower a vertical level of the lift module 160 and then move out from the space under the loading structure 10.

Because a vertical level of the bottom surface of the loading structure 10 is equal to or lower than approximately 300mm, the autonomous mobile robot is required to have a height equal to or smaller than 280mm to enter the space under the bottom surface of the loading structure.

When the loading structure 10 and the autonomous mobile robot 100 are constructed individually as such, the autonomous mobile robot 100 may continue to transport even during a time it takes to load or unload an item, thereby increasing an amount of items that may be transported by one autonomous mobile robot 100.

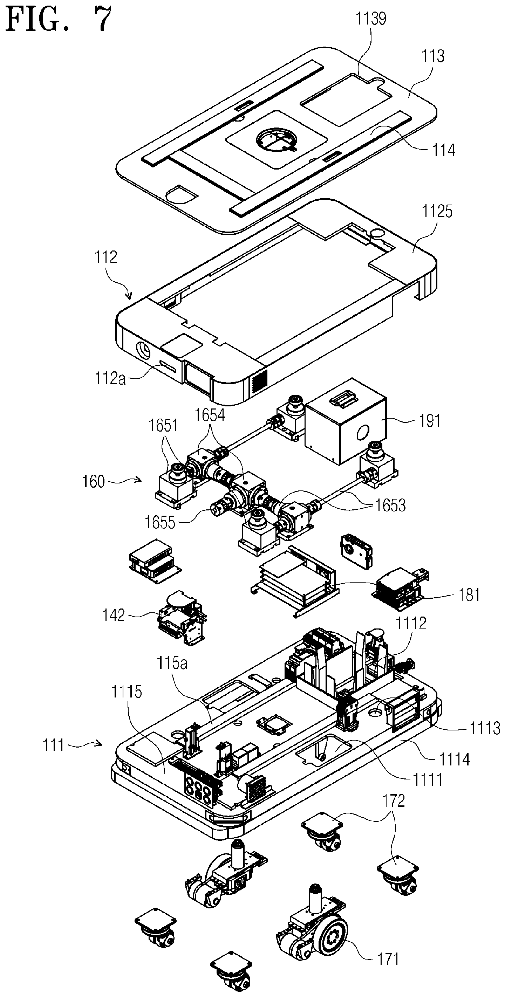

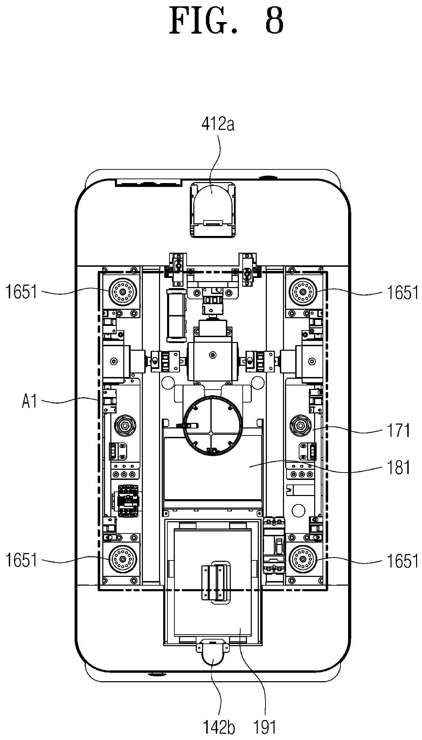

FIG. 7 is an exploded perspective view of the autonomous mobile robot 100 according to a first embodiment of the present disclosure, and FIG. 8 is a plan view of the autonomous mobile robot 100 in FIG. 7 with the middle frame 112 and the top frame 113 removed.

The autonomous mobile robot 100 may include the body 110 composed of the bottom frame 111, the middle frame 112, and the top frame 113. The battery 191, the lift module 160, the control box 181 including the plurality of substrates, the Lidar 142, and the like may be mounted on the top surface of the bottom frame 111. The driving unit 170 located on the bottom surface of the bottom frame 111 may be composed of the pair of main driving units 171 and the four casters 172.

The bottom frame 111 may include a plate-shaped base plate 1115. The bottom frame 111 has a problem in that a vertical level of the body 110 increases when the bottom frame 111 is spaced apart from the floor by a size of the main wheel 1711. Therefore, the existing autonomous mobile robot 100 secures a space for placing the main wheel 1711 by bending the bottom frame 111. However, the bottom frame 111, which protrudes upward in a portion where the main wheel 1711 is located, is weak in rigidity.

The bent bottom frame 111 of the present disclosure uses the flat plate-shaped base plate 1115 to enhance the low rigidity. The base plate 1115 may include an opening to secure a mounting space for the main wheels 1711, the battery 191, and the like. The base plate 1115 may include a pair of first openings 1111 at both left and right sides for arranging the main wheels of the main driving unit 171. Via the first openings 1111, upper ends of the main wheels of the main driving unit 171 and suspension structures may be positioned upward of the base plate 1115, thereby lowering a vertical level of the base plate 1115 from the floor.

Further, among the structures positioned upward of the base plate 1115, the battery 191, a shaft of the lift module 160, or the like is not able to secure sufficient space with only a space between the base plate 1115 and the top frame 113.

To use a greater size battery 191, a second opening 1112 may be defined in the base plate 1115, and a battery 191 seating portion 119 protruding downward may be defined in the second opening 1112.

The lift module 160 may include the vertically disposed shaft that moves in a vertical direction, and when the shaft is movable only on the top surface of the base plate 1115, a stroke of the lift module 160 may not be able to be sufficiently secured.

Therefore, the base plate 1115 may include a third opening 1113 into which the shaft is inserted such that the shaft may protrude downward of the base plate 1115.

When a bending process is omitted using the plate-shaped base plate 1115, errors occurring during the bending process and reduction in rigidity by the bending process may be prevented. However, because the rigidity may become lowered when the number of openings increases, the bottom frame 111 may further include rigid bars 115a and 115b to supplement the rigidity.

The autonomous mobile robot 100 may include a first rigid bar 115a located on the top surface of the base plate 1115. The first rigid bar 115a may include a pair of first rigid bars extending in a first direction (a travel direction) and being spaced apart from each other in a second direction (a width direction) perpendicular to the first direction.

The first rigid bar 115a may include the pair of first rigid bars instead of a form that crosses the center, to arrange the lift module 160 and the battery 191 inside. The pair of first rigid bars 115a may be arranged adjacent to the first openings 1111, and the top surface of the base plate 1115 may be divided into three spaces in the width direction via the pair of first rigid bars 115a.

A middle area between the pair of first rigid bars 115a may be used to place the battery 191 or the control box 181, so that there is an advantage of increasing space utilization inside the body 110.

In one example, referring to FIG. 5, a second rigid bar 115b positioned on a bottom surface of the base plate 1115 may be further included. The second rigid bars 115b may extend in the second direction and be spaced apart from each other in the first direction. The second rigid bar 115b may be positioned orthogonally to the first rigid bar 115a to prevent bending deformation or damage of the bottom frame 111. The second rigid bar 115b may be positioned between the caster 172 and the main driving unit 171.

The bottom frame 111 may further include an edge skirt protruding downward along a periphery of the base plate 1115. The driving unit 170 may be covered so as not to be exposed to the outside via an edge skirt 1114, so that the driving unit 170 may be protected. A bumper 117 may further be included to prevent the edge skirt 1114 from being damaged by colliding with an obstacle or the like.

The control box 181, the lift module 160, the battery 191, and the sensors such as the Lidar 142 may be placed on the top surface of the bottom frame 111. The middle frame 112 may cover the components seated on the bottom frame 111 and may be coupled to the bottom frame 111.

The middle frame 112 may also include a top surface 1125 that covers top surfaces of the components. However, the lift module 160 should be connected to the top frame 113 by extending through the middle frame 112, and the top frame 113 is placed on top of the middle frame 112, so that a middle portion of the top surface 1125 may be in an open form.

The top frame 113 may be fastened to the lift module 160 installed on the bottom frame 111 and may move vertically based on the operation of the lift module 160. To stably support the loading structure 10, the top frame 113 may be formed in a plate shape with a predetermined thickness. A top surface of the top frame 113 may form a flat surface, but a bottom surface thereof may include an uneven surface for rigidity and for fastening with the lift module 160.

The lift module 160 has a variable height in the vertical direction, and the lift module 160 in the present embodiment is an integrated lift module 160 that may operate a plurality of jack screws 1651 in the vertical direction with one lift motor 1655.

The lift module 160 in the present embodiment may include the lift motor 1655, the plurality of jack screws 1651, and a power transmission screw 1653 that is disposed horizontally to the lift motor 1655 and transmits power of the lift motor 1655 to the jack screw 1651.

The lift motor 1655 may be disposed at a center in the width direction and may be connected to the power transmission screw 1653 via a gear block 1654 such as a bevel gear. The power transmission screws 1653 may be disposed in the first direction and the second direction and may operate the jack screws 1651 arranged at a plurality of points.

The lift module 16 in the present embodiment may include the four jack screws 1651, and because they are operated by one lift motor 1655, the four jack screws 1651 may move in synchronization. Therefore, the top frame 113 may move vertically without tilting, and the top frame 113 may be fixed to upper ends of the jack screws 1651.

Each jack screw 1651 may include a screw shaft disposed in the vertical direction, and the screw shaft may be introduced and withdrawn in a direction of the bottom surface of the base plate 1115. The bottom frame 111 may include a shaft cover (not shown) that covers the screw shaft protruding downward.

As shown in FIG. 8, a square area A1 defined by the four jack screws 1651 becomes a support area that supports the loading structure 10. The wider the support area, the more stable the movement is during the travel. However, when a gap between a pair of jack screws 1651 arranged laterally is widened further or the pair of jack screws 1651 move further in a front and rear direction, there is interference with a field of view (FOV) of the Lidar 142.

Further, because the screw shaft protrudes downward, it should be placed at a location where it does not interfere with the caster 172, so that the jack screw 1651 may be placed at a location that does not overlap the caster 172, as shown in FIG. 8.

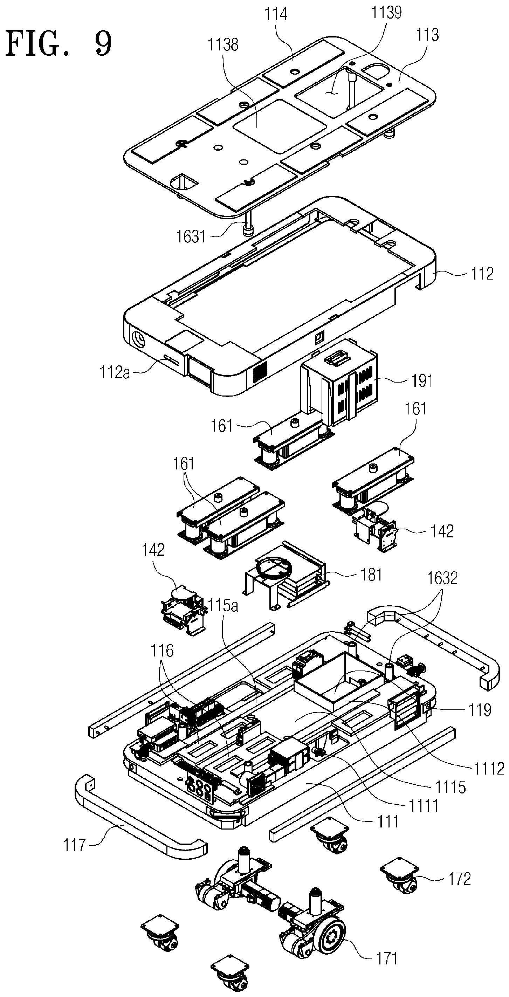

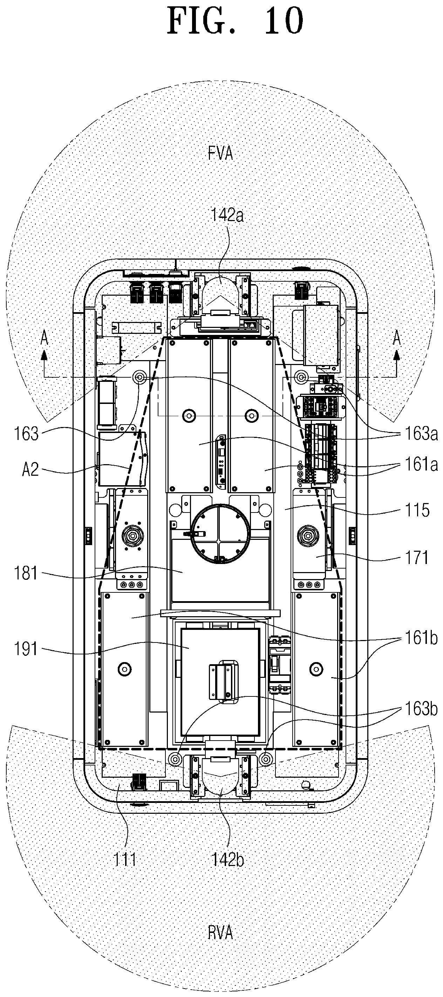

FIG. 9 is an exploded perspective view of the autonomous mobile robot 100 according to another embodiment of the present disclosure, and FIG. 10 is a plan view of the autonomous mobile robot 100 in FIG. 9 with the middle frame 112 and the top frame 113 removed.

Unlike the embodiment in FIG. 7, the lift module 160 in the present embodiment is composed of a plurality of independent lift units 161 that operate individually. The independent lift units 161 have an advantage of being cheaper and having a greater support load than the integrated lift module in FIG. 7.

However, because the independent lift units 161 are operated individually, when a failure occurs in one lift unit 161, the top frame 113 may tilt and, in some cases, the top frame 113 may be damaged.

Because the lift unit 161 has a length in a longitudinal direction greater than that in the embodiment in FIG. 7, the top frame 113 may be stably supported, but it is difficult to secure the mounting space on the bottom frame 111.

In particular, the Lidar 142 has the field of view equal to or greater than 200°, and the lift unit 161 should be positioned so as not to interfere with the field of view of the Lidar 142 so that the surrounding obstacle and terrain may be accurately identified.

To ensure safe travel of the autonomous mobile robot 100, a field of view (FVA) of a front Lidar 142 needs to be secured as great as possible. For a front Lidar 142a to secure the field of view, front lift units 161a may be arranged with a narrower horizontal spacing than rear lift units 161b.

The autonomous mobile robot 100 of the present disclosure may additionally include a Lidar 142b at a rear side in addition to the Lidar 142a located at a front side to sense obstacles not only located ahead but also located behind.

Because the rear Lidar 142b senses an area in a direction opposite to the travel direction, a field of view (RVA) of the rear Lidar 142b may be narrower than the field of view (FVA) of the front Lidar 142a. Therefore, the spacing between the rear lift units 161b may be slightly wider than the spacing between the front lift units 161a.

Because the first rigid bar 115a is located on the top surface of the base plate 1115, the front lift unit 161a may be disposed inward of the first rigid bar 115a, and the rear lift unit 161 may be disposed outward of the first rigid bar 115a.

As shown in FIG. 10, because the spacing between the front lift units 161a is narrow, the front lift units 161a may be practically located at the rear of the front Lidar 142a. Because the front lift units 161a are arranged between the pair of first rigid bars 115a, the field of view (FVA) of the front Lidar 142a may be expanded to about 250°.

The field of view (RVA) of the rear Lidar 142b is required to be 200° smaller than that of the front Lidar, and even when the rear lift units 161b are arranged with the wider spacing than the front lift units 161a, they do not interfere with the field of view (RVA) of the rear Lidar 142.

The four lift units 161 may be arranged so as not to interfere with the field of view (FVA) of 250° of the front Lidar 142 and the field of view (RVA) of 200° of the rear Lidar 142. Unlike the embodiment in FIG. 8 described above, a support area A2 defined by the four lift units 161a and 161b has different widths at front and rear sides.

However, because there is no shaft screw moving in the vertical direction, arrangement overlapping the cast in the vertical direction is available, so that the lift units 161 may be arranged to protrude further forward and rearward than in the embodiment in FIG. 7.

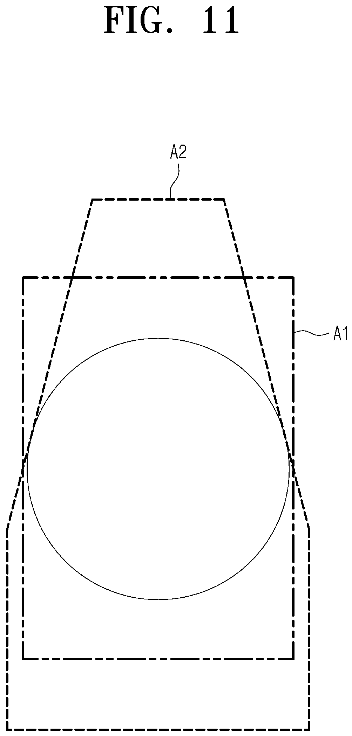

FIG. 11 is a diagram comparing the support areas of the autonomous mobile robots 100 according to the first embodiment and the second embodiment of the present disclosure. The support area A1 of the first embodiment in FIG. 7 has a rectangular shape, but the support area A2 of the second embodiment in FIG. 9 has a greater width in the rear side, has a smaller width in the front side, and is longer in the front and rear direction (the first direction) compared to the first embodiment.

In the case of the second embodiment, the shape is not rectangular, but the support area size is rather increased, so that sufficient support force may be secured.

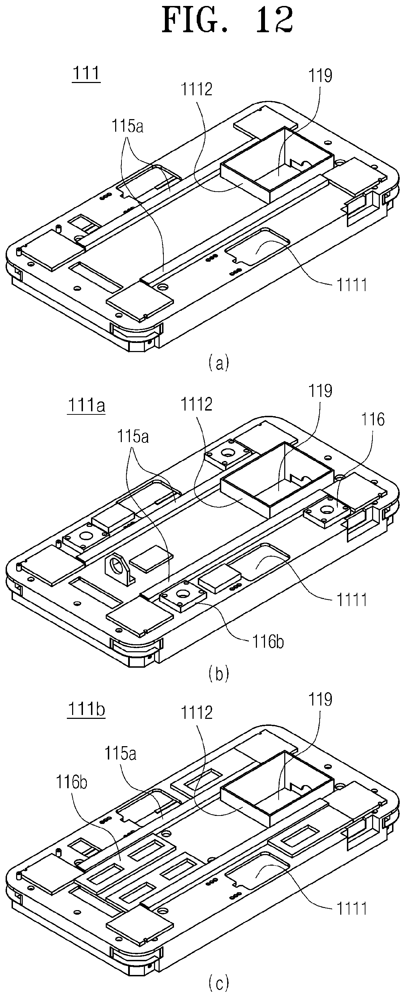

FIG. 12 is a perspective view illustrating the bottom frame 111 of the autonomous mobile robot 100 of the present disclosure. The lift modules 160 in the first embodiment and the second embodiment are different from each other, but the remaining components such as the driving unit 170, the battery 191, and the control box 181 are similar.

Because the components other than the lift module 160 are the same in the first embodiment and the second embodiment, a basic structure of the bottom frame 111 may use the same structure. As shown in (a) in FIG. 12, the battery seating portion 119 and the rigid bar 115a may be fastened to the base plate 1115 including the first opening 1111 and the second opening 1112 to constitute the basic bottom frame 111.

A bottom frame 111a in the first embodiment and a bottom frame 111b in the second embodiment may be implemented by attaching lift seating brackets 116a and 116b corresponding to the shapes of the lift modules 160 installed on the basic bottom frame 111, respectively.

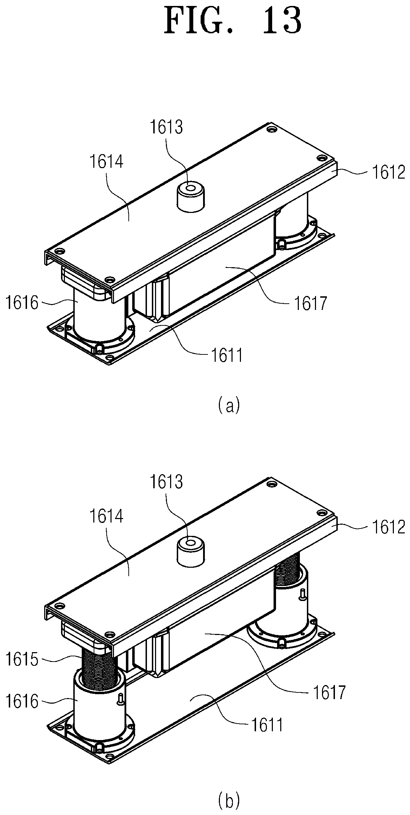

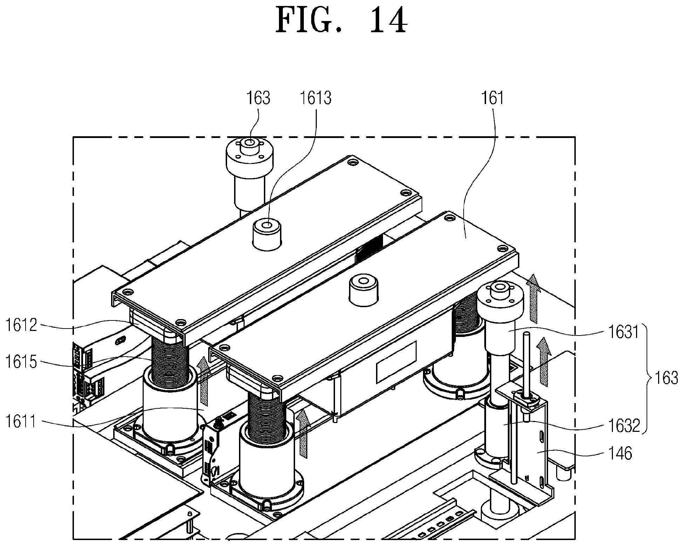

FIG. 13 is a diagram illustrating the lift unit 161 of the autonomous mobile robot 100 according to the second embodiment of the present disclosure, and FIG. 14 is a diagram illustrating the lift module 160 of the autonomous mobile robot 100 according to the second embodiment of the present disclosure.

The lift module 160 in the second embodiment includes the four lift units 161, and (a) in FIG. 13 illustrates the lift unit 161 in a standby state, and (b) in FIG. 13 illustrates the lift unit 161 in a lifted state.

The independent lift unit 161 in the present embodiment may include a lift base 1611 fixed to the bottom frame 111, a lift top 1612 that moves vertically with respect to the lift base 1611, and an actuator 1615 and 1616 that is positioned between the lift base 1611 and the lift top 1612 and has a variable length.

The actuator 1615 and 1616 may include a screw boss 1616 formed on the lift base 1611 in a jack screw manner, an actuator screw 1615 that is introduced into and withdrawn from the screw boss by rotating, and an actuator motor 1617 that provides a rotational force to the actuator screw 1615.

Because the lift unit 161 in the present embodiment has the actuator screw 1615 located on the lift top 1612, the actuator motor may also be coupled to the lift top 1612. In the lifted state, as shown in (b) in FIG. 13, the actuator screw 1615 may push the lift top 1612 upward while being withdrawn from the screw boss.

The lift module 160 in the second embodiment is composed of the four independent lift units 161, so that when one of them is not operated or is not synchronized and thus a vertical level of at least one independent lift unit 161 is different, the top frame 113 may tilt or be damaged.

To prevent the damage to the top frame 113 when the lift unit 161 is not synchronized, a state in which the top frame 113 is placed on the lift unit 161 may be achieved without directly fastening the independent lift unit 161 to the top frame 113.

However, to prevent the top frame 113 from being pushed out of the lift top 1612 of the lift unit 161 and thus misaligned, a non-slip protrusion 1613 formed on the lift top 1612 may be included. The top frame 113 may include a non-slip groove 1136 into which the non-slip protrusion 1613 is inserted. In addition, a lift pad 1614 may be added to a top surface of the lift top 1612 to prevent locations of the top frame 113 and the lift top 1612 from being misaligned.

However, in this case, the top frame 113 is not fixed to the lower structure and thus is able to be easily separated from the body 110. To fix the top frame 113 to the body 110 without restricting the vertical movement of the top frame 113, a lift guide 163 connecting the top frame 113 and the bottom frame 111 of the present disclosure to each other may be included.

Referring to FIG. 14, the lift guide 163 may include a guide pin 1631 fixed to the top frame 113 and a guide flange 1632 fixed to the bottom frame 111 and into which the guide pin 1631 is inserted.

The lift guide 163 also includes the pin-shaped member extending vertically, which affects the field of view of the Lidar 142. Therefore, as shown in FIG. 10, the lift guide 163 may be positioned adjacent to the lift unit 161 and may be positioned so as not to interfere with the field of view of the Lidar 142.

In addition, the lift guide 163 may protrude downward of the base plate 1115, so that the lift guide 163 may be positioned so as not to overlap the driving unit 170 located under the base plate 1115.

As shown in FIG. 10, front lift guides 163a may be positioned outward of the first rigid bars 115a, and rear lift guides 163b may be positioned between the pair of first rigid bars 115a.

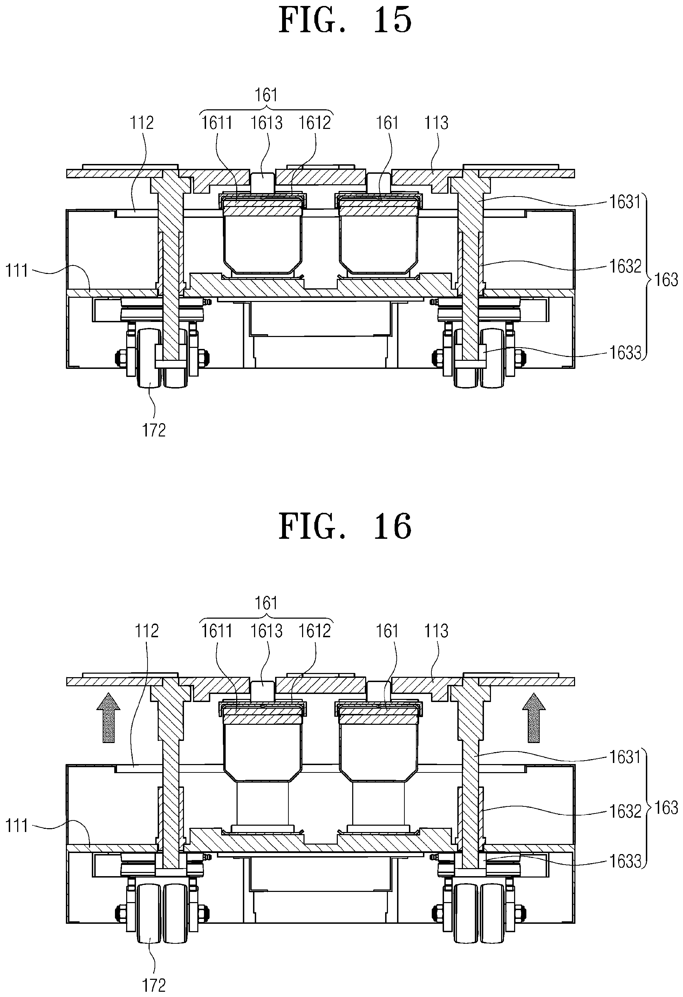

FIG. 15 is a cross-sectional view of the autonomous mobile robot 100 in the standby state according to the second embodiment of the present disclosure, and is a cross-sectional view taken along a line A-A in FIG. 10. FIG. 16 is a cross-sectional view of the autonomous mobile robot 100 in the lifted state according to the second embodiment of the present disclosure. As shown in FIGS. 15 and 16, the guide pin 1631 extends through the guide flange 1632 and protrudes to the bottom surface of the base plate 1115. The guide pin 1631 may include a pin stopper 1633 at a lower end thereof so as not to deviate from the guide flange 1632. The pin stopper 1633 may come into contact with the bottom surface of the base plate 1115 when the lift module 160 is switched to be in the lifted state as shown in FIG. 16.

As shown in FIG. 16, when one side of the top frame 113 is pressed while the top frame 113 is lifted, the other side of the top frame 113 may be lifted upward because the lift unit 161 and the top frame 113 are not fixed to each other. However, the pin stopper 1633 located at the lower end of the guide pin 1631 may be in contact with the bottom surface of the base plate 1115 to prevent the top frame 113 from deviating.

The pin stopper 1633 may include an elastic member such as urethane or a spring. The elastic member may prevent the pin stopper 1633 and a lift frame from coming into contact with each other and generating noise when the lifted state is reached or while the autonomous mobile robot 100 is traveling. In addition, the elastic member may absorb an impact applied to the pin stopper 1633 of the lift guide 163 located at the other side of the top frame 113 when an impact is applied to one side of the top frame 113.

The lift module 160 may include a lift sensor 146 for sensing an amount of elevation. The lift sensor 146 may include a limit switch that senses lower and upper ends in an operating range of the lift module 160, that is, a location in the standby state and a location in the lifted state.

As illustrated in FIG. 14, the lift sensor 146 may be connected to the top frame 113 and move in the vertical direction to sense a change in the location of the top frame 113.

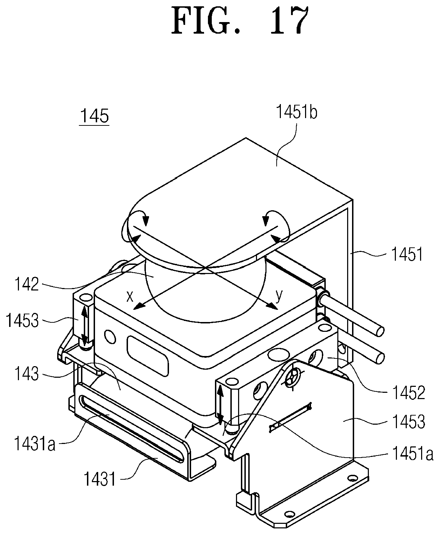

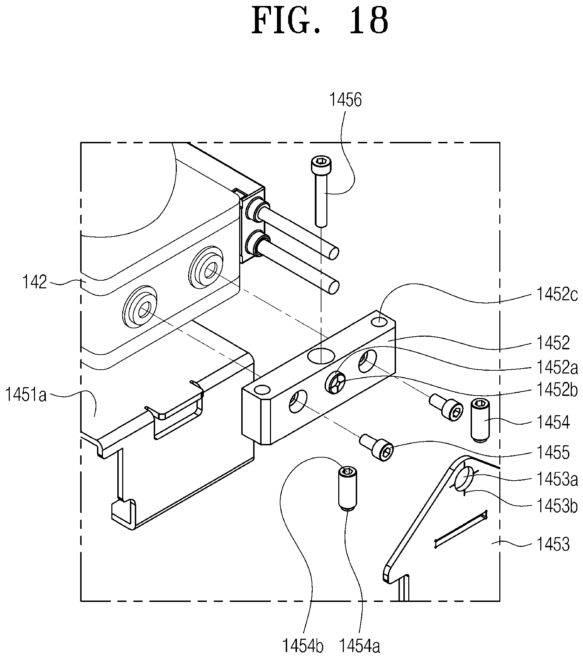

FIG. 17 is a perspective view illustrating an optical sensor module 145 of the autonomous mobile robot 100 of the present disclosure, and FIG. 18 is an exploded perspective view illustrating the optical sensor module 145 of the autonomous mobile robot 100 of the present disclosure.

The autonomous mobile robot 100 may draw a map in real time using a simultaneous localization and mapping (SLAM) technology, identify a location thereof in the map, and then find a desired destination and travel or perform a desired task.

For the autonomous mobile robot 100 to draw the map and measure a location of a surrounding object to identify the location thereof, measurement data analysis of the Lidar 142 and a 3D camera 143, which are measuring devices, is performed.

The Lidar 142 capable of collecting 2D data in a wide range in real time and the 3D camera for 3D object recognition may be required, and precision of the SLAM may be improved by precisely adjusting locations of the measurement sensors.

The Lidar 142 and the 3D camera 143 required for implementing the SLAM technology may be equipped as the single optical sensor module 145 and mounted on the autonomous mobile robot 100. The optical sensor module 145 of the autonomous mobile robot 100 of the present disclosure has an advantage of easy mounting of the Lidar 142 and the 3D camera 143 on the body 110. The autonomous mobile robot 100 may mount the optical sensor modules 145 at front and rear sides of the body 110.

The optical sensor module 145 may include an optical bracket 1451 fixed to the base plate 1115. The optical bracket 1451 may include a seating surface 1451a on which the Lidar 142 is seated, and may include a Lidar cover 1451b for protecting an upper portion of the Lidar 142.

The seating surface 1451a may include a leg at a lower portion of the optical bracket 1451 so as to be spaced apart from the base plate 1115 by a predetermined distance. The optical bracket 1451 may place the Lidar 142 at a location spaced apart from the base plate 1115 by the predetermined distance, so that a light emitting portion and a light receiving portion of the Lidar 142 may be positioned on a top surface of the middle frame 112.

Because the Lidar 142 has the field of view equal to or greater than 180°, a slit extending rearward is required based on the location of the Lidar 142. The autonomous mobile robot 100 of the present disclosure may omit a laterally long slit corresponding to the field of view of the Lidar 142 in the body 110, and may utilize the space between the middle frame 112 and the top frame 113 as a gap to secure the field of view of the Lidar 142.

Because the Lidar 142 senses an object on a plane, even when the sensing plane of the Lidar 142 is distorted by merely 1°, a completely different result may be obtained, so that the placement of the Lidar 142 is important. After mounting the optical sensor module 145 on the bottom frame 111, a zero-point adjustment of the Lidar 142, that is, an adjustment for an observation surface to form a plane should be performed.

The optical sensor module 145 of the present disclosure may include level adjustment screws 1454 that may individually adjust vertical levels of four corners to adjust an angle of the Lidar 142.

When the level adjustment screw 1454 is directly fastened to a lower portion of the Lidar 142 module, a vertical level of the Lidar 142 may increase and adjustment of the level adjustment screw 1454 may become difficult because of obstruction by the Lidar 142.

The present disclosure may couple adjustment blocks 1452 to left and right side surfaces of the Lidar 142 using fastening pins 1455 and place the level adjustment screws 1454 that may adjust a protrusion amount at a lower portion of the adjustment block 1452.

A lower end of the level adjustment screw 1454 may be in contact with the seating surface 1451a of the optical bracket 1451, and the protrusion amount of the level adjustment screw 1454 on the adjustment block 1452 may be adjusted to adjust the distance from the seating surface 1451a of the adjustment block 1452.

Each of the pair of adjustment blocks 1452 may have the two level adjustment screws 1454 arranged in the front and rear direction, and inclinations of the Lidar 142 in x-axis and y-axis directions may be adjusted by adjusting the protrusion amounts (insertion amounts) of the four level adjustment screws 1454.

A vertical hole 1452c into which the level adjustment screw 1454 is inserted may extend upward of the adjustment block 1452 to expose a driver groove 1454b at an upper portion of the level adjustment screw 1454 upward. The insertion amount of the level adjustment screw 1454 may be adjusted by inserting a driver into the vertical hole 1452c.

A lower end 1454a of the level adjustment screw 1454 has a hemispherical shape, so that even when lengths of some of the level adjustment screws 1454 are adjusted and the adjustment block 1452 is tilted, the level adjustment screws 1454 may remain in contact with the seating surface 1451a.

The level adjustment screw 1454 is not fastened to, but is placed on the seating surface 1451a, so that a fixing pin 1456 that fixes the adjustment block 1452 to the seating surface 1451a may be further included. The fixing pin 1456 may be located between the pair of level adjustment screws 1454, so that a center portion of the adjustment block 1452 may be fixed by the fixing pin 1456 and vertical levels of front and rear portions of the adjustment block 1452 may be changed by the level adjustment screws 1454.

Side brackets 1453 may be positioned on left and right sides of the adjustment blocks 1452 and each side bracket 1453 may include a level guide hole 1453a into which a level guide protrusion 1452a protruding from the adjustment block 1452 is inserted. The side bracket 1453 is fixed to the base plate 1115 and fixes the optical sensor module 145 to the bottom frame 111.

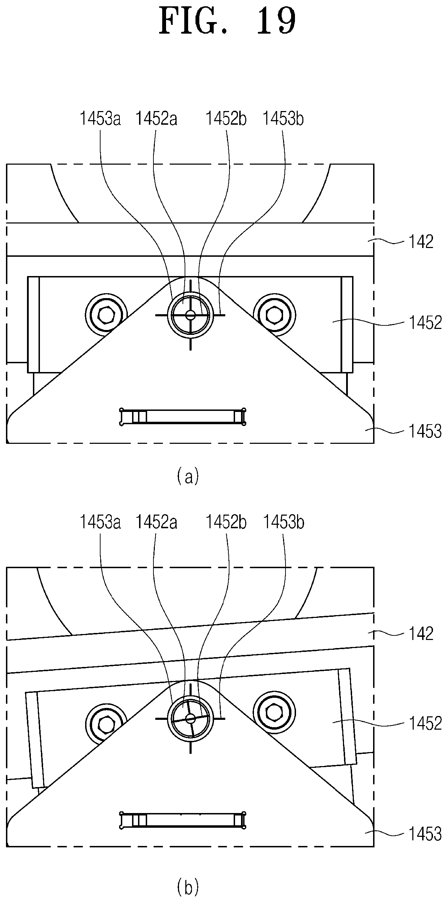

FIG. 19 is a diagram illustrating angle markers 1452b and 1453b formed on the level guide protrusion 1452a and the level guide hole 1453a of the optical sensor module 145 of the autonomous mobile robot 100 of the present disclosure.

The level guide protrusion 1452a of the adjustment block 1452 and the level guide hole 1453a of the side bracket 1453 may respectively include the angle markers 1452b and 1453b such that an angle adjustment amount of the Lidar 142 module may be visually identified. A first angle marker 1452b may have a cross shape, and a second angle marker 1453b may have lines indicating four angles corresponding to the cross shape of the first angle marker 1452b.

When a protrusion amount of a rear level adjustment screw 1454 is increased to adjust the angle from a state shown in (a) in FIG. 19, a location of the first angle marker 1452b changes as shown in (b) in FIG. 19 and the first angle marker 1452b becomes misaligned with the second angle marker 1453b. The angle adjustment amount of the Lidar 142 may be roughly identified with the naked eye via the first angle marker 1452b and the second angle marker 1453b.

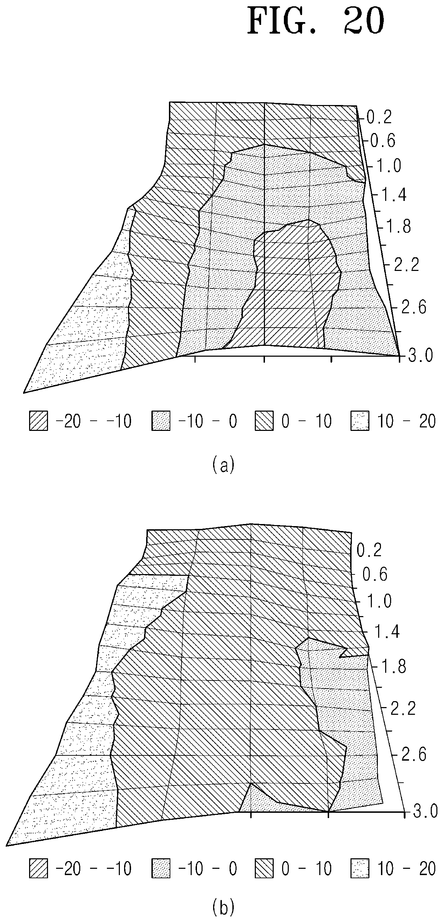

FIG. 20 is a diagram showing an uneven surface of the terrain sensed by the Lidar 142 before and after the level adjustment of the optical sensor module 145 of the autonomous mobile robot 100 of the present disclosure. When the Lidar 142 senses a flat floor surface as in (a), a height error of about 30-40mm occurs. The error may be reduced as in (b) in FIG. 20 by adjusting the angle of the Lidar 142 with the level adjustment screw 1454.

The level adjustment screw 1454 of the present disclosure has an advantage of being easy to be implemented because it may easily improve precision of the Lidar 142 without expensive and complicated equipment.

Referring to FIG. 17, the optical sensor module 145 of the autonomous mobile robot 100 of the present disclosure may have the 3D camera 143 positioned under the seating surface 1451a. The 3D camera 143 has lower precision and a smaller field of view than the Lidar 142, but is able to obtain a three-dimensional image, so that the simultaneous localization and mapping (SLAM) technology may be implemented based on information sensed by the Lidar 142 and the 3D camera 143 by supplementing insufficient information of the Lidar 142.

The 3D camera 143 may include a plurality of image sensors spaced apart from each other in a horizontal direction to implement the 3D image, and may also include an infrared camera. Because the optical sensor is positioned downward of the Lidar 142, the middle frame 112 may include a camera hole 112a (see FIG. 9) for the 3D camera 143.

The autonomous mobile robot 100 may collide with the obstacle, and in this case, the 3D camera 143 may be damaged, so that the 3D camera 143 may be placed to be spaced inwardly apart from the camera hole 112a. However, in this case, a size of the camera hole 112a should be increased to secure a field of view of the camera, and when the camera hole 112a is large, an internal structure thereof may be exposed.

A ring-shaped protrusion that surrounds the camera hole 112a may be further formed outward of the camera hole 112a, but it may be increased in size for the field of view of the camera and may be easily separated by an impact.

The 3D camera 143 of the present disclosure may further include a camera protection cover 1431 that protects the 3D camera 143 at the front. The camera protection cover 1431 may define a camera slit 1431a of a size that does not obstruct the field of view of the 3D camera 143.

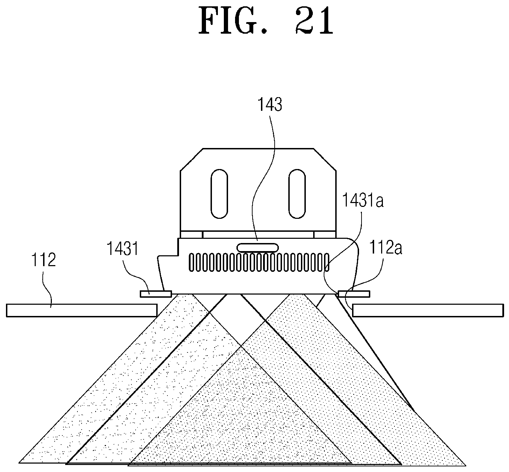

FIG. 21 is a diagram illustrating the field of view of the 3D camera 143 of the optical sensor module 145 of the autonomous mobile robot 100 of the present disclosure. The plurality of image sensors may have different fields of view. Because the camera protection cover 1431 is disposed closer to the 3D camera 143 than the camera hole 112a, a size of the camera slit 1431a may be smaller than the size of the camera hole 112a.

Because the field of view of the 3D camera 143 is smaller in the vertical direction, a vertical width of the camera slit 1431a may be as small as about 6mm.

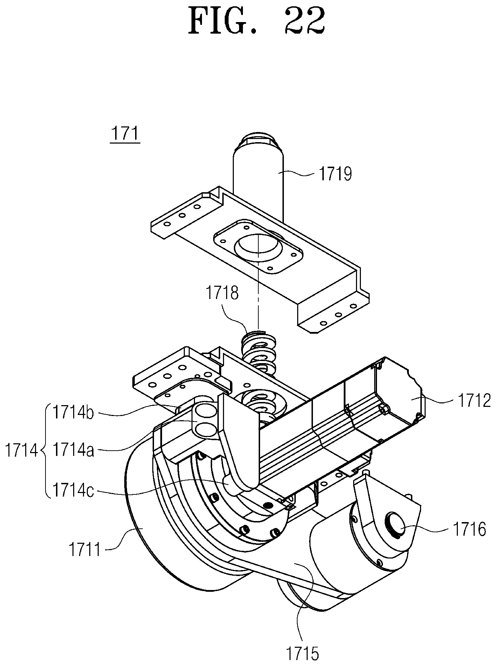

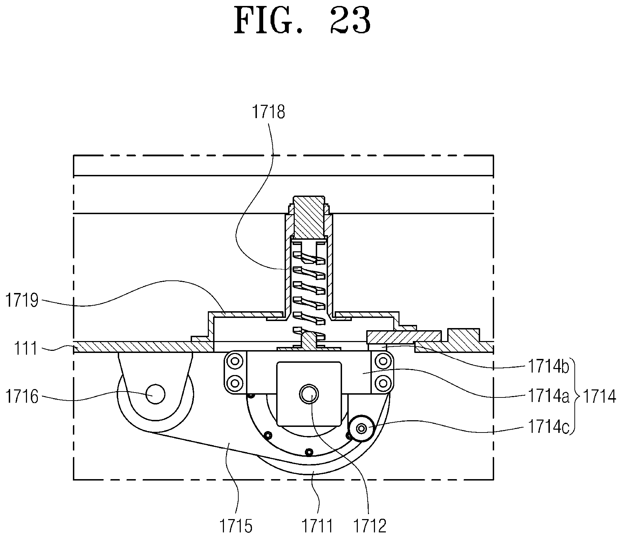

FIG. 22 is a perspective view illustrating the main driving unit 171 of the autonomous mobile robot 100 of the present disclosure, and FIG. 23 is a cross-sectional view illustrating the main driving unit 171 of the autonomous mobile robot 100 of the present disclosure.

The main driving unit 171 includes a driving motor 1712 and provides travel power for the mobile robot. The pair of main driving units 171 may be arranged in the left and right direction and may be positioned at the center in the front and rear direction.

The main driving units 171 may be arranged symmetrically in the left and right direction, and the casters 172 may be positioned in the front and rear direction of the main driving units 171. The casters 172 may be positioned slightly inward of the main driving units 171, so that the two wheels of the main driving units 171 and the four wheels of the casters 172 may be arranged to form a hexagonal shape.

The main driving unit 171 of the autonomous mobile robot 100 of the present disclosure may include the driving motor 1712 that provides the power, a wheel bracket 1715 to which the driving motor 1712 is fastened, the main wheel 1711 that is rotatably fastened to the wheel bracket 1715 and rotates by receiving the power from the driving motor 1712, a suspension spring 1718 that is positioned between the wheel bracket 1715 and the body 110 and has elasticity, and a stopper module 1714 that restricts a vertical location of the wheel bracket 1715.

The driving motor 1712 may be positioned inward of the main wheel 1711 and may be fixed to the wheel bracket 1715. The driving motor 1712 may be positioned inward and the main wheel 1711 may be positioned outward with respect to the wheel bracket 1715.

When a wheel size of the main wheel 1711 is too great, a lower space of the mobile robot becomes larger, so that it is difficult to implement a structure that may enter the space under the loading structure 10 with a height of 300mm. The main wheel 1711 in the present embodiment is implemented to have a diameter of 150mm.

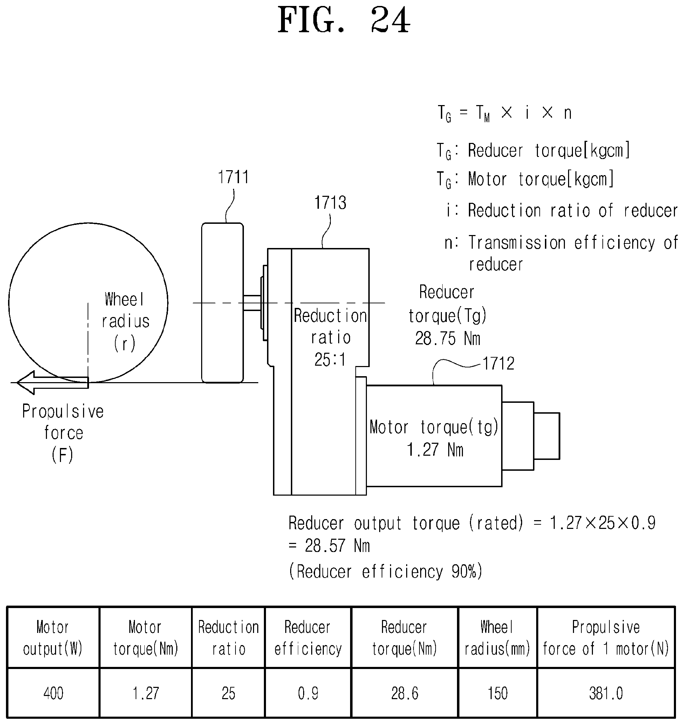

FIG. 24 is a diagram for illustrating a propulsive force of the main driving unit 171 of the autonomous mobile robot 100 of the present disclosure.

A reducer 1713 may be used to amplify a torque of the driving motor 1712. The reducer 1713 is a structure with a plurality of gears disposed between the driving motor 1712 and the main wheel 1711, and is able to increase a torque instead of reducing the number of rotations of the main wheel 1711 by reducing a rotation speed of the main wheel 1711 and transmitting the reduced rotation speed to the main wheel 1711.

For example, when the rotation speed of the driving motor 1712 with a torque of 1.27Nm is reduced by the reducer 1713 with a reduction ratio of 25:1 and the driving force is transmitted to the main wheel 1711, a torque of the reducer 1713 may be 25 times that of the driving motor 1712. However, depending on efficiency of the reducer, a torque of 28.57Nm, which is reduced to a certain degree (for example, reduced by 10%), may be transmitted to the main wheel 1711. Because the propulsive force is a value obtained by dividing the torque by a radius of the main wheel 1711, the propulsive force of a pair of main driving units 171 becomes 762.7N.

The suspension spring 1718 is an apparatus that absorbs an uneven surface on the travel route of the autonomous mobile robot 100. The suspension spring 1718 may be disposed between the bottom frame 111 and the wheel bracket 1715, and may have a coil spring form extending in the vertical direction.

Considering the placement of the suspension spring 1718, the first opening 1111 may be defined at a location corresponding to the main wheel 1711 in the base plate 1115, and a suspension bracket protruding upward from the first opening 1111 may be installed, so that the suspension may be disposed in a state of protruding upward of the base plate 1115.

The suspension spring 1718 may effectively absorb an impact of the floor surface, thereby preventing damage to the autonomous mobile robot 100 and the item of the loading structure 10 loaded thereon. The main driving unit 171 may have a stability issue when connected only with the body 110 and the suspension spring 1718, so that the wheel bracket 1715 may include a suspension hinge 1716 that extends from the suspension spring 1718 to one side and is rotatably fastened to the bottom frame 111.

The suspension spring 1718 has an advantage of providing stable operation in the autonomous mobile robot 100, but in the autonomous mobile robot 100 of the present disclosure, a load that the driving unit 170 should support may vary depending on whether the loading structure 10 is loaded. In particular, when a step is formed on the floor surface and vertical levels of the floor surfaces where the main driving unit 171 and the caster 172 are located are different from each other, a weight is concentrated on the caster 172.

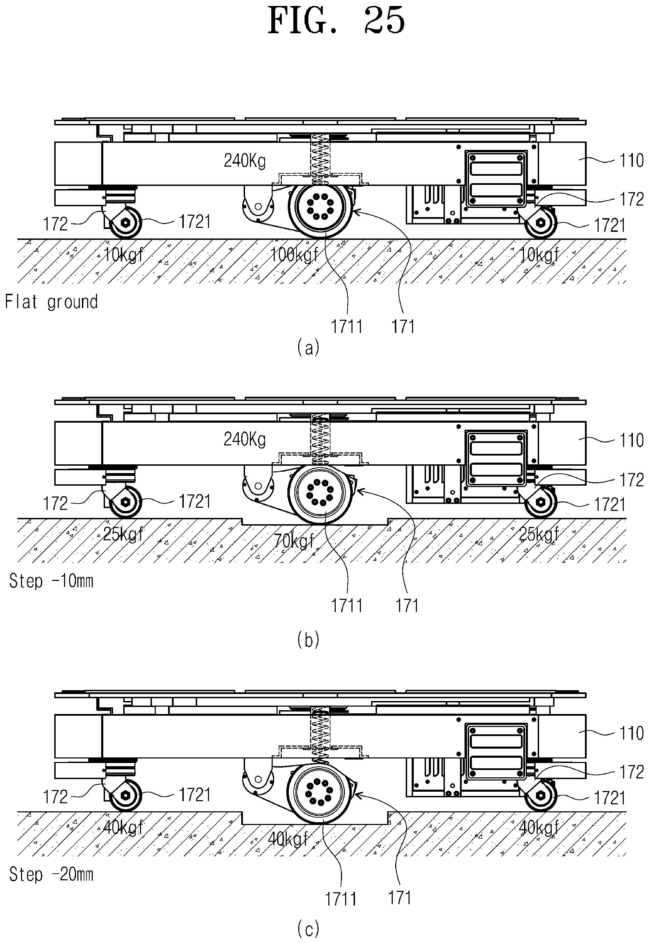

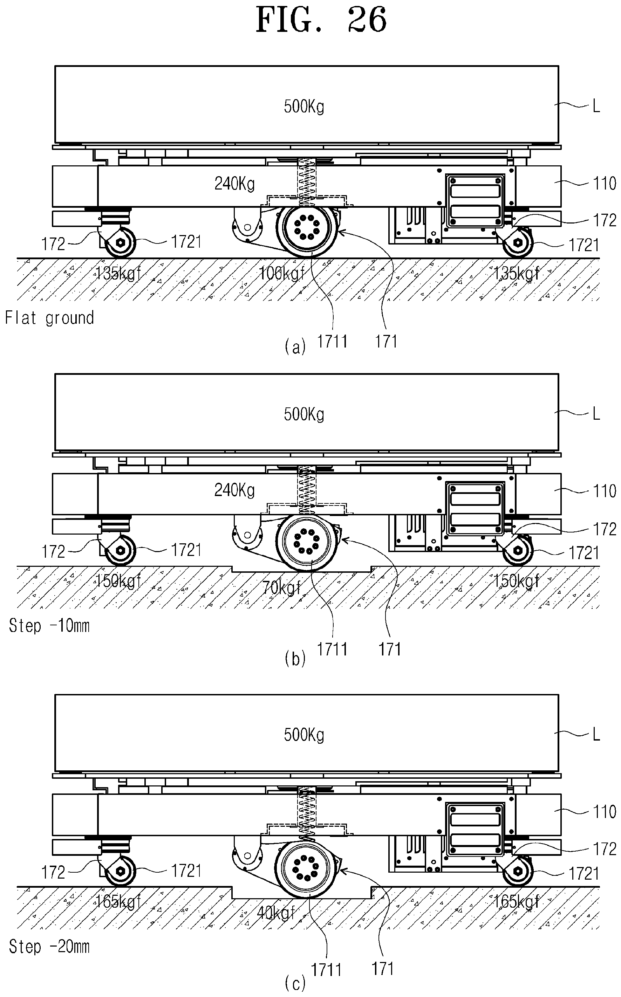

FIGS. 25 and 26 are diagrams illustrating load distribution of the driving unit 170 of the autonomous mobile robot 100 without the stopper module 1714.

FIG. 25 shows a state in which the loading structure 10 is not located at the top, and FIG. 25 shows a state in which the loading structure 10 is mounted at the top. (a) shows a state in which the floor surface is flat, and (b) and (c) show a case in which a floor surface where the main wheel 1711 is located is 10mm lower and 20mm lower than a floor surface where the caster wheel 1721 is located.

As shown in (a) in FIG. 25, a description will be made based on a case in which a mass of the autonomous mobile robot 100 is 240kg. In the standby state, a great portion of the weight of the autonomous mobile robot 100 may be loaded on the main driving unit 171. Each of the two main driving units 171 may support a load of 100kgf, and each of the four casters 172 may support a load of 10kgf.

When the propulsive force of the main wheel 1711 of the main driving unit 171 is greater than a frictional force of the floor surface, the main wheel 1711 may slip. When the slip occurs in the main wheel 1711, as the power of the driving motor is not transmitted to the body 110, the caster 172 wheel also does not rotate and the autonomous mobile robot 100 is not able to operate, so that it may be designed that the great portion of the load is applied to the main driving unit 171.

However, when there is the step on the floor surface as shown in (b) in FIG. 25, when the main driving unit 171 is located on the floor surface lower than the floor surface where the caster 172 is located, the suspension spring 1718 of the main driving unit 171 extends and the main wheel 1711 touches the floor surface.

However, in this case, a load transferred to the main driving unit 171 is reduced via the suspension spring 1718. When the step size is great as shown in (c) in FIG. 25, a reduction amount of the load is greater. The weight reduced in the main driving unit 171 may be transferred to the caster 172, and the load supported by the caster 172 may increase.

FIG. 26 illustrates a state in which the loading structure 10 is seated on top of the mobile robot. A description will be made based on a case in which a mass of the loading structure 10 is 500kg, and a shape actually transported is a trailer-shaped loading structure, but is expressed as a 500kg box for comparative description of the load.

A magnitude of the load transferred to the main wheel 1711 varies depending on a length of the suspension spring 1718. Because the caster 172 does not change in a vertical level, the length of the suspension spring 1718 is the same regardless of whether the loading structure 10 is mounted. However, as described with reference to FIG. 25, the length of the suspension spring 1718 may vary depending on the change in the vertical level of the floor surface, and thus the load applied to the main driving unit 171 may vary.

As shown in (a) in FIG. 26, when the floor surface is flat and the main driving unit 171 and the caster 172 are located at the same vertical level, even when the loading structure 10 is mounted on the autonomous mobile robot 100, the length of the suspension spring 1718 is the same, so that one main driving unit 171 only supports a load of 100kg.

Therefore, in reality, the 500kg load of the loading structure 10 is supported by the four casters 172, each supporting 125kg, so that there is a problem that a magnitude of the load supported by the caster 172 increases.

Further, when passing over the step as shown in (b) and (c) in FIG. 26, when the main driving unit 171 is located at a lower location than the caster 172, the length of the suspension spring 1718 increases, so that the magnitude of the load supported by the main driving unit 171 becomes smaller and the magnitude of the load supported by the caster 172 becomes greater.

In addition to the problem of the caster 172 being overloaded, there is a problem of the slip occurring in the main driving unit 171. When the propulsive force of the main driving unit 171 is greater than a frictional force of the main wheel 1711, the main wheel 1711 may not move the body 110 forward and may rotate in place.

A frictional force between the main wheel 1711 and the floor surface may be determined by the product of the magnitude of the load applied to the main wheel 1711 and a friction coefficient. In a case of a typical asphalt road, a (kinetic) friction coefficient is approximately 0.6, and the friction coefficient is able to be increased by forming an uneven surface on a floor of a logistics center to prevent the slip.

For example, when a static friction coefficient of the floor surface of the logistics center is 0.7, a maximum static frictional force for the load of 200kgf applied to the pair of main wheels 1711 is 1372N. Because the propulsive force (762.7N in the embodiment in FIG. 25) of the main wheel 1711 is smaller than the maximum static frictional force, propulsion is available without the slip.

However, when the main wheel 1711 is located lower than the caster 172 wheel, the load applied to the main wheel 1711 decreases, so that the maximum static frictional force also decreases. At the 10mm step, it is 960N, which is greater than the propulsive force of the main wheel, but at the 20mm step, it is only 548.8N, so that the slip may occur.

In addition, even when the robot is not located at the step, when an output of the driving motor 1712 is increased to transport the heavy loading structure 10, as the propulsive force increases, the slip may occur.

Therefore, when the suspension spring 1718 is equipped, the shaking may be reduced and the impact applied to the autonomous mobile robot 100 and the loading structure 10 may be reduced, but the load applied to the caster 172 increases excessively, and the slip occurs when the output of the driving motor 1712 is increased or when passing over the step.

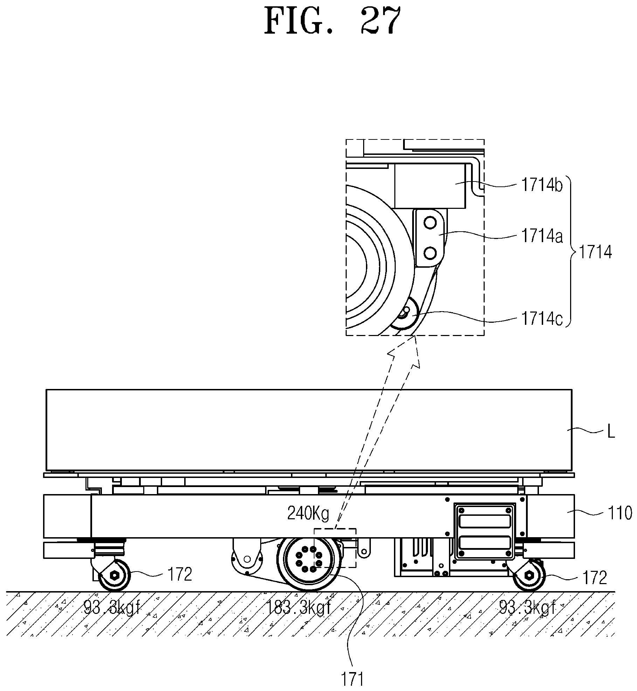

FIG. 27 is a diagram illustrating load distribution of the driving unit 170 of the autonomous mobile robot 100 of the present disclosure. The present disclosure may add the stopper module 1714 to the main driving unit 171 to solve the above problem.

Referring to FIG. 27, the stopper module 1714 may include a stopper bracket 1714a fixed to the wheel bracket 1715, and an upper stopper 1714b located on the stopper bracket 1714a and fixed to the bottom frame 111.

Because the wheel bracket 1715 rotates around the suspension hinge 1716, the stopper module 1714 may be located on an opposite side of the suspension hinge 1716 with respect to the main wheel 1711 to effectively limit the movement of the suspension spring 1718.

A lower stopper 1714c may be further included at a lower portion to limit an extension length of the suspension spring 1718. Because the wheel bracket 1715 rotates around the suspension hinge 1716, the lower stopper 1714c may be disposed to be biased toward the suspension hinge 1716 compared to the upper stopper 1714b.

The upper stopper 1714b may be designed to be in contact with the stopper bracket 1714a when the main wheel is on flat ground, so that the mounted load may be transferred to the main wheel 1711 via the stopper module 1714. As illustrated in FIG. 27, the load added by the loading structure 10 is also equally distributed to the main wheel 1711 via the stopper module 1714, so that a load of 183.5kgf is applied to the main wheel 1711.

The upper stopper 1714b and the stopper bracket 1714a are designed to be in contact with each other on the flat ground, so that as the load on the main wheel 1711 increases, the maximum static frictional force increases, thereby preventing the slip.

However, even when the upper stopper 1714b and the stopper bracket 1714a are designed to be in contact with each other on the flat ground, when the upper stopper 1714b and the stopper bracket 1714a are spaced apart from each other on the floor surface where the step is formed, the load is applied to the caster 172 again, as shown in (b) and (c) in FIG. 26, and the slip may occur in the main wheel 1711.

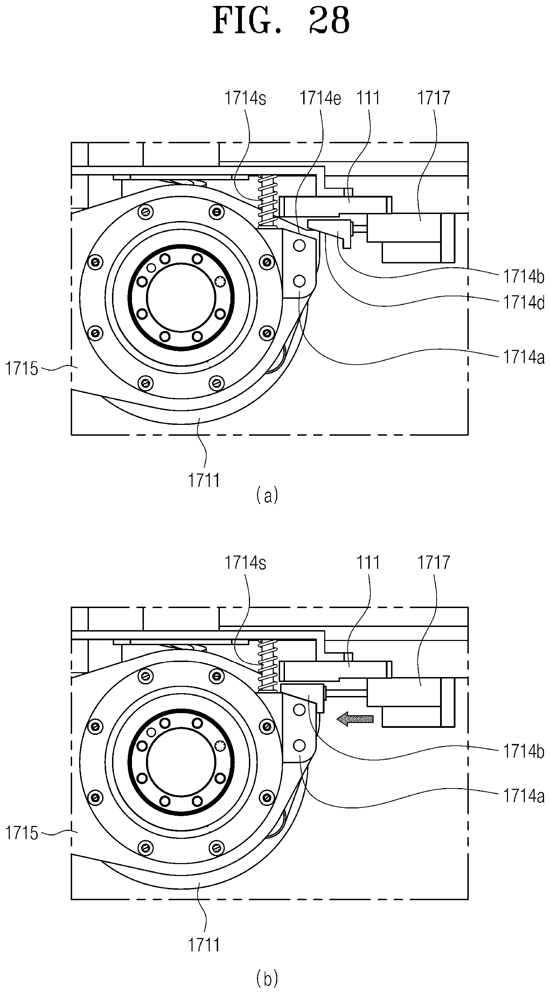

FIG. 28 is a diagram illustrating another embodiment of the stopper module 1714 of the main driving unit 171 of the autonomous mobile robot 100 of the present disclosure.

Because the stopper module 1714 in the above-mentioned embodiment still has the problem that the load is not applied to the main wheel 1711 when passing over the step, the present embodiment may further include a stopper actuator 1717 to solve such problem.

The stopper actuator 1717 selectively inserts a stopper block 1717b between the upper stopper 1714b and the stopper bracket 1714a to fill a gap between the upper stopper 1714b and the stopper bracket 1714a when the autonomous mobile robot 100 travels.

The stopper block 1717b may include a first inclined surface 1717d as illustrated in FIG. 28, and may also include a second inclined surface 1714e on a surface facing the first inclined surface 1717d of the stopper block 1717b.

As illustrated in FIG. 28, when the first inclined surface 1717d faces the stopper bracket 1714a, the second inclined surface 1714e may be formed on the stopper block 1717b, and when the first inclined surface 1717d faces the bottom surface of the bottom frame 111, the second inclined surface 1714e may be formed on a bottom surface of the upper stopper 1714b.

The stopper block 1717b has a smaller height at one end and a greater height at the other end closer to the stopper actuator 1717 because of the first inclined surface 1717d.

When a gap between the stopper bracket 1714a and the upper stopper 1714b increases, the stopper actuator 1717 may be extended in length, so that a section with a greater height of the stopper block 1717b may be positioned between the stopper bracket 1714a and the upper stopper 1714b.

The controller 180 may sense a vertical level difference of the floor surface via the sensor such as the Lidar 142 and the 3D camera 143, and determine whether there is the step in the travel direction based thereon. When passing over the step in the travel direction, the controller 180 may control the stopper actuator 1717, so that the stopper block 1717b may fill the gap between the stopper bracket 1714a and the upper stopper 1714b. With such real-time control of the stopper actuator 1717, the load applied to the main wheel 1711 may be distributed to the caster 172, preventing the occurrence of the slip.

A step sensor 1714s that senses a location of the stopper bracket 1714a or one side of the wheel bracket 1715 may be included. When a distance from the step sensor 1714s to the stopper bracket 1714a or the wheel bracket 1715 changes, the controller 180 may determine that the main wheel 1711 is passing over the step, and operate the stopper actuator 1717.

Alternatively, when the stopper actuator 1717 provides a force in a direction of pressing the stopper block 1717b and a gap between the stopper bracket 1714a and the bottom frame 111 widens, the stopper block 1717b may be inserted.

Alternatively, a stopper elastic portion (not shown) that presses the stopper block 1717b toward one end may be interposed between the stopper actuator 1717 and the stopper block 1717b. When the gap between the stopper bracket 1714a and the upper stopper 1714b widens, the stopper elastic portion may push the stopper block 1717b toward the one end to fill the widened gap.

The stopper actuator 1717 may prevent excessive load from being applied to the caster 172 by interposing the stopper block 1717b between the stopper bracket 1714a and the upper stopper 1714b before the loading structure comes into contact with the upper frame and the load is applied.

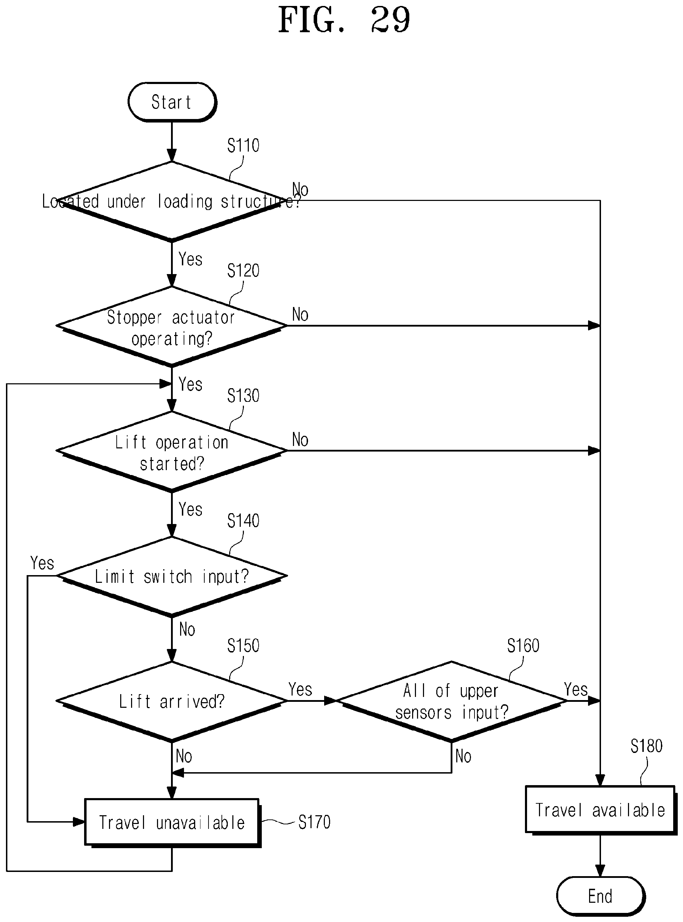

FIG. 29 is a flowchart illustrating a method for operating the stopper module 1714 of the autonomous mobile robot 100 in FIG. 28. First, when the autonomous mobile robot 100 completes moving to the space under the loading structure 10 (S110), the stopper actuator 1717 may be operated (S120). When the robot is not located under the loading structure 10, the driving unit 170 may continue to travel.

It is preferable that the stopper block 1717b is inserted between the stopper bracket 1714a and the upper stopper 1714b while the driving unit 170 is stopped, so that it may operate before the lift module 160 is operated after the autonomous mobile robot completes moving to the space under the loading structure 10. Because the load distribution is impossible when the stopper actuator 1717 is not operated, the lift module 160 may not be operated.

After the stopper actuator 1717 is operated to fill the gap between the upper stopper 1714b and the stopper bracket 1714a, the lift module 160 may be operated to move the top frame 113 upward (S130), so that the bottom surface of the loading structure 10 may be lifted.

When the plurality of lift units 161 are used, when even one of them is not operated, the top frame 113 will not be lifted stably, so that the lift sensor 146 may be included as shown in FIG. 14.

The lift sensor 146 may include the limit switch that generates a signal at the lower end or the upper end of the lift module 160. When the lower end limit switch is turned OFF (S140), it may be determined that the top frame 113 has moved upward. When the lower end limit switch is turned on, because the top frame 113 is located at the lower end, it may be determined that the travel is unavailable (S170) and the operation of the lift module 160 may be tried again.

When the lift module 160 is operated to the upper end (S150), and the upper sensor 147 located on the top surface of the top frame 113 touches the bottom surface of the loading structure 10 and recognizes the loading structure 10 (S160), it may be determined that the lift operation is complete and the travel to transport the loading structure 10 may be started (S180).

When the lift module 160 does not reach the upper end or the upper sensor 147 does not recognize the bottom surface of the loading structure 10, it may be determined that the loading structure 10 has not been mounted on the autonomous mobile robot 100, so that the travel is not able to be started (S170). When it may be determined that the travel is unavailable, the operation of the lift module 160 may be tried again (S130).

As described above, the autonomous mobile robot of the present disclosure may avoid the reduction in the rigidity resulted from the bending molding using the plate-shaped base plate.

In addition, the autonomous mobile robot of the present disclosure may increase the accuracy of the SLAM because the lift unit does not interfere with the field of view of the Lidar.

In addition, the autonomous mobile robot of the present disclosure may modularize the Lidar and the 3D camera, which facilitates the mounting thereof on the body.

In addition, the autonomous mobile robot of the present disclosure may finely adjust the angle of the Lidar, thereby obtaining accurate information on the obstacle and the terrain ahead.

In addition, the autonomous mobile robot of the present disclosure may travel stably without the slip by stably distributing the load to the wheels of the driving unit regardless of whether the loading structure is mounted.

In addition, the autonomous mobile robot of the present disclosure may prevent the slip from occurring even when passing over the floor surface with the step because the load is not concentrated on the specific wheel.

## Claims

1. An autonomous mobile robot (100) configured to transport an item loaded on a top surface thereof, the autonomous mobile robot (100) comprising:
a bottom frame (111);
a pair of main driving units positioned under the bottom frame (111) and operated by power of a driving motor; and
four casters (172) positioned adjacent to lower corners of the bottom frame (111), respectively,
wherein the main driving unit includes:
a wheel bracket (1715) fastened with the driving motor (1712);
a main wheel (171) rotatably fastened to the wheel bracket (1715) and rotatable by receiving the power of the driving motor (1712);
a suspension spring (1718) positioned between the wheel bracket (1715) and the bottom frame (111);
a stopper bracket (1714a) fastened to the wheel bracket (1715); and
an upper stopper (1714b) positioned on a bottom surface of the bottom frame (111) to face the stopper bracket (1714a).

2. The autonomous mobile robot (100) of claim 1, further comprising:
a stopper actuator (1717) configured to selectively introduce and withdraw a stopper block (1717b) into and from a space between the stopper bracket (1714a) and the upper stopper (1714b); and
a controller (180) configured to control the driving motor (1712) and the stopper actuator (1717).

3. The autonomous mobile robot (100) of claim 2, wherein the stopper block (1717b) includes a first inclined surface having a smaller height at one end than at the other end,
wherein the stopper actuator (1717) is configured to vary an insertion amount of the stopper block (1717b).

4. The autonomous mobile robot (100) of claim 3, further comprising:
a lift module (160) seated on top of the bottom frame (111) and having a variable height in a vertical direction; and
a top frame (113) configured to transition from a standby state to a lifted state while being spaced upwardly apart from the bottom frame (111) by the lift module (160),
wherein the controller (180) is configured to operate the stopper actuator (1717) before the lift module (160) is lifted to insert the stopper block (1717b) into the space between the stopper bracket (1714a) and the upper stopper (1714b).

5. The autonomous mobile robot (100) of claim 4, further comprising:
a lift sensor (146) configured to sense a lifted height of the top frame (113); and
an upper sensor (147) configured to sense that the top frame (113) touches a bottom surface of the loading structure,
wherein the controller (180) is configured to stop operating the lift module (160) and operate a driving motor (1712) when both the lift sensor (146) and the upper sensor (147) are turned on.

6. The autonomous mobile robot (100) of one of claims 2 to 5, wherein the controller (180) is configured to control a length of the stopper actuator (1717) such that the stopper block (1717b) remains in contact with the upper stopper (1714b) and the stopper bracket (1714a) when the driving structure passes over a floor surface having a step.

7. The autonomous mobile robot (100) of claim 6, further comprising a Lidar module (142) configured to sense a vertical level of the floor surface ahead,
wherein the controller (180) is configured to determine whether there is the step based on a vertical level difference of the floor surface sensed by the Lidar module (142).

8. The autonomous mobile robot (100) of claim 6 or claim 7, further comprising a step sensor (1714s) configured to sense a location of the stopper bracket (1714a) or one side of the wheel bracket (1715),
wherein the controller (180) is configured to determine that the driving structure passes over the floor surface having the step when the step sensor (1714s) senses a change in the location.

9. The autonomous mobile robot (100) of one of claim 3 to 8, wherein the stopper actuator (1717) is configured to maintain the stopper block (1717b) in a pressurized state while the autonomous mobile robot (100) travels.

10. The autonomous mobile robot (100) of one of claim 3 to 9, further comprising a stopper elastic portion positioned between the stopper actuator (1717) and the stopper block (1717b).

11. The autonomous mobile robot (100) of one of claim 3 to 10, wherein a surface of the upper stopper (1714b) or the stopper bracket (1714a) facing the first inclined surface (1714d) of the stopper block (1717b) includes a second inclined surface (1714e).

12. The autonomous mobile robot (100) of one of claim 1 to 11, wherein the wheel bracket (1715) includes a suspension hinge (1716) located adjacent to a shaft of the main wheel (171) and fixed to the bottom frame (111).

13. The autonomous mobile robot (100) of claim 12, wherein the suspension hinge (1716) and the upper stopper (1714b) are positioned in opposite directions with respect to the main wheel.

14. The autonomous mobile robot (100) of one of claim 1 to 13, further comprising a lower stopper (1714c) facing a bottom surface of the stopper bracket (1714a).

15. The autonomous mobile robot (100) of one of claim 1 to 14, wherein the upper stopper (1714b) is fixed to the bottom surface of the bottom frame (111) and constructed to come into contact with the stopper bracket (1714a) on a flat ground.
